(19)

Europäisches
Patentamt
European
Patent Office
Office européen
des brevets

(11) **EP 3 396 955 A1**

(12) **EUROPEAN PATENT APPLICATION**
published in accordance with Art. 153(4) EPC

(43) Date of publication:
**31.10.2018 Bulletin 2018/44**

(21) Application number: **17753423.7**

(22) Date of filing: **13.02.2017**

(51) Int Cl.:
**H04N 19/119** (2014.01)    **H04N 19/176** (2014.01)
**H04N 19/105** (2014.01)    **H04N 19/182** (2014.01)

(86) International application number:
**PCT/KR2017/001523**

(87) International publication number:
**WO 2017/142262 (24.08.2017 Gazette 2017/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **16.02.2016 US 201662295684 P**

(71) Applicant: **Samsung Electronics Co., Ltd.
Suwon-si, Gyeonggi-do 16677 (KR)**

(72) Inventors:
• **PARK, Min-woo
Yongin-si
Gyeonggi-do 17079 (KR)**

• **JIN, Bo-ra
Yongin-si
Gyeonggi-do 16843 (KR)**
• **CHOI, In-kwon
Seongnam-si
Gyeonggi-do 13555 (KR)**
• **KIM, Chan-yul
Seongnam-si
Gyeonggi-do 13479 (KR)**
• **CHOI, Na-rae
Seoul 06781 (KR)**
• **MIN, Jung-hye
Yongin-si
Gyeonggi-do 17103 (KR)**
• **LEE, Sun-il
Seoul 06751 (KR)**

(74) Representative: **Appleyard Lees IP LLP
15 Clare Road
Halifax HX1 2HY (GB)**

(54) **ADAPTIVE BLOCK PARTITIONING METHOD AND APPARATUS**

(57)    Provided are a method and apparatus for adaptively partitioning a block. An image decoding method according to an embodiment includes determining reference pixels used to partition a coding unit, from among pixels adjacent to the coding unit, determining a partition location indicating a location of a boundary for partitioning the coding unit, based on at least one of a location having a highest pixel gradient and a location of a detected edge from among the reference pixels, obtaining a plurality of prediction units from the coding unit by partitioning the coding unit in a predetermined direction from the partition location, and predicting the plurality of prediction units.

FIG. 11

**Description**

TECHNICAL FIELD

The present disclosure relates to an image encoding and decoding method and apparatus, and more particularly, to a method and apparatus for adaptively partitioning a block.

BACKGROUND ART

Image data is encoded by a codec according to a predetermined data compression standard, e.g., the Moving Picture Expert Group (MPEG) standard, and then is stored in a recording medium or transmitted through a communication channel in the form of a bitstream.

Since hardware capable of reproducing and storing high-resolution or high-quality image content has been developed and become popularized, a codec capable of efficiently encoding or decoding the high-resolution or high-quality image content is in high demand. To reproduce the encoded image content, the image content may be decoded. Currently, methods of effectively compressing the high-resolution or high-quality image content are used.

Various data units may be used for image compression, and a hierarchical structure may be present between the data units. A data unit may be partitioned in various ways to determine the size of a data unit used for image compression, and image encoding or decoding may be performed by determining a data unit optimized for image characteristics.

DESCRIPTION OF EMBODIMENTS

TECHNICAL PROBLEM

Provided are a method and apparatus for adaptively partitioning a block.

SOLUTION TO PROBLEM

According to an aspect of the present disclosure, an image decoding method includes determining reference pixels used to partition a coding unit, from among pixels adjacent to the coding unit, determining a partition location indicating a location of a boundary for partitioning the coding unit, based on at least one of a location having a highest pixel gradient and a location of a detected edge from among the reference pixels, obtaining a plurality of prediction units from the coding unit by partitioning the coding unit in a predetermined direction from the partition location, and predicting the plurality of prediction units.

The predetermined direction may be a direction for vertically or horizontally partitioning the coding unit.

The determining of the reference pixels may include determining pixels having a higher variance value as the reference pixels by comparing a variance value of pixels adjacent to a top side of the coding unit to a variance value of pixels adjacent to a left side of the coding unit.

The predicting may include setting predicted values of pixels corresponding to the boundary as average predicted values of the prediction units partitioned by the boundary, when the location of the boundary for partitioning the coding unit indicates integer pixels.

The predicting may include setting predicted values of pixels adjacent to the boundary, based on predicted values of the prediction units partitioned by the boundary, when the location of the boundary for partitioning the coding unit indicates a boundary between integer pixels.

The determining of the partition location may include selecting one of two partition location candidates from among the reference pixels.

When a prediction mode of the coding unit is an inter mode, the partition location may be derived as information indicating a location of a boundary of another coding unit, and a motion vector.

Information about the predetermined direction may be obtained from a bitstream.

According to another aspect of the present disclosure, an image decoding method includes obtaining, from a bitstream, reference partition location information indicating a reference location of one or more boundaries for partitioning a coding unit, determining the one or more boundaries by partitioning the coding unit by a predetermined number of pixels from the reference location, based on the reference partition location information, partitioning a plurality of prediction units from the coding unit, based on the one or more boundaries, and predicting the plurality of prediction units.

The reference partition location information may indicate a location of a boundary, which is closest to a top left pixel of the coding unit, from among the one or more boundaries.

The predetermined number of pixels may be based on a size of the coding unit.

The partitioning of the plurality of prediction units may include selecting one of the one or more boundaries, and partitioning two prediction units from the coding unit, based on the selected boundary.

According to another aspect of the present disclosure, an image decoding method includes determining whether a current transformation unit partitioned from a coding unit is out of an outline of a picture, by comparing a location of the current transformation unit in the picture to at least one of a width and height of the picture, partitioning the current transformation unit in at least one direction into a plurality of transformation units when the current transformation unit is out of the outline of the picture, obtaining, from a bitstream, partition information of the current transformation unit and partitioning the current transformation unit into a plurality of transformation units, based on the partition information when the current transformation unit is not out of the outline of the picture, and inversely transforming a transformation unit, which is no longer partitioned, from among the plurality of transformation units.

The current transformation unit may be recursively partitioned in at least one direction into a plurality of transformation units until at least one of the plurality of transformation units is not out of the outline of the picture.

The partition information of the current transformation unit may not be obtained from the bitstream when the current transformation unit is out of the outline of the picture.

BRIEF DESCRIPTION OF DRAWINGS

FIG. 1 is a block diagram of an image encoding apparatus according to an embodiment.
FIG. 2 is a block diagram of an image decoding apparatus according to an embodiment.
FIG. 3 illustrates various shapes of prediction units partitioned from a coding unit.
FIG. 4 illustrates adaptive partitioning of a coding unit, according to a first embodiment.
FIG. 5 illustrates adaptive partitioning of a coding unit, according to a second embodiment.
FIG. 6 illustrates a method of predicting a boundary area for partitioning a coding unit, according to an embodiment.
FIG. 7 illustrates a method of partitioning a coding unit by a predetermined number of pixels, according to an embodiment.
FIG. 8 illustrates an operation of determining whether a transformation unit is out of an outline of a picture, according to an embodiment.
FIG. 9 illustrates a transformation unit extending across an outline of a picture, according to an embodiment.
FIGS. 10A to 10C illustrate methods of partitioning a transformation unit extending across an outline of a picture, according to embodiments.
FIG. 11 is a flowchart of an image decoding method according to an embodiment.
FIG. 12 is a flowchart of an image decoding method according to another embodiment.
FIG. 13 is a flowchart of an image decoding method according to another embodiment.
FIG. 14 illustrates an operation of determining one or more coding units by partitioning a current coding unit, according to an embodiment.
FIG. 15 illustrates processes of determining at least one coding unit when a coding unit having a non-square shape is partitioned, according to an embodiment.
FIG. 16 illustrates processes of partitioning a coding unit, based on at least one of a block shape information and partition shape information, according to an embodiment.
FIG. 17 illustrates a method of determining a predetermined coding unit from among an odd number of coding units, according to an embodiment.
FIG. 18 illustrates an order of processing a plurality of coding units when the plurality of coding units are determined by partitioning a current coding unit, according to an embodiment.
FIG. 19 illustrates processes of determining that a current coding unit is partitioned into an odd number of coding units when coding units are not processable in a predetermined order, according to an embodiment.
FIG. 20 illustrates processes of determining at least one coding unit by partitioning a first coding unit, according to an embodiment.
FIG. 21 illustrates that a shape into which a second coding unit is partitionable is restricted when the second coding unit having a non-square shape determined when a first coding unit is partitioned satisfies a predetermined condition, according to an embodiment.
FIG. 22 illustrates processes of partitioning a coding unit having a square shape when partition shape information is unable to indicate that a coding unit is partitioned into four square shapes, according to an embodiment.
FIG. 23 illustrates that an order of processing a plurality of coding units may be changed according to processes of partitioning a coding unit, according to an embodiment.
FIG. 24 illustrates processes of determining a depth of a coding unit as a shape and size of the coding unit are changed, when a plurality of coding units are determined when the coding unit is recursively partitioned, according to an embodiment.

FIG. 25 illustrates a part index (PID) for distinguishing depths and coding units, which may be determined according to shapes and sizes of coding units, according to an embodiment.

FIG. 26 illustrates that a plurality of coding units are determined according to a plurality of predetermined data units included in a picture, according to an embodiment.

FIG. 27 illustrates a processing block serving as a criterion of determining a determination order of at least one reference coding units included in a picture, according to an embodiment.

MODE OF DISCLOSURE

Hereinafter, the present disclosure will be described in detail by explaining embodiments of the disclosure with reference to the attached drawings. The disclosure may, however, be embodied in many different forms and is not construed as being limited to the embodiments set forth herein; rather, these embodiments are provided so that this disclosure will be thorough and complete, and will fully convey the concept of the disclosure to one of ordinary skill in the art.

Terminology used in this specification will now be briefly described before describing embodiments in detail.

Although the terms used in the following description are selected, as much as possible, from general terms that are widely used at present while taking into consideration the functions obtained in accordance with the embodiments, these terms may be replaced by other terms based on intentions of one of ordinary skill in the art, customs, emergence of new technologies, or the like. In a particular case, terms that are arbitrarily selected by the applicant may be used. In this case, the meanings of these terms may be described in corresponding parts of the embodiments. Therefore, it is noted that the terms used herein are construed based on practical meanings thereof and the whole content of this specification, rather than being simply construed based on names of the terms.

As used herein, the singular forms "a", "an", and "the" are intended to include the plural forms as well, unless the context clearly indicates otherwise.

It will be understood that the terms "comprises", "comprising", "includes" and/or "including", when used herein, specify the presence of stated elements, but do not preclude the presence or addition of one or more other elements. The term "module" is used to denote an entity for performing at least one function or operation, and may be embodied as, but is not limited to, a software element or a hardware element such as a field-programmable gate array (FPGA) or an application-specific integrated circuit (ASIC). A "module" may be configured to exist in an addressable storage medium or to operate one or more processors. Thus, for example, the "module" includes elements (e.g., software elements, object-oriented software elements, class elements, and task elements), processes, functions, attributes, procedures, subroutines, segments of program code, drivers, firmware, micro-codes, circuits, data, database, data structures, tables, arrays, and parameters. Functions provided in elements and "modules" may be combined to a smaller number of elements and "modules" or may be divided into a larger number of elements and "modules".

In the following description, the term "image" denotes a still image, e.g., a still frame of a video, or a moving image, e.g., a video itself.

Reference will now be made in detail to embodiments, examples of which are illustrated in the accompanying drawings. In the following description, for clarity, parts or elements that are not related to the embodiments are omitted.

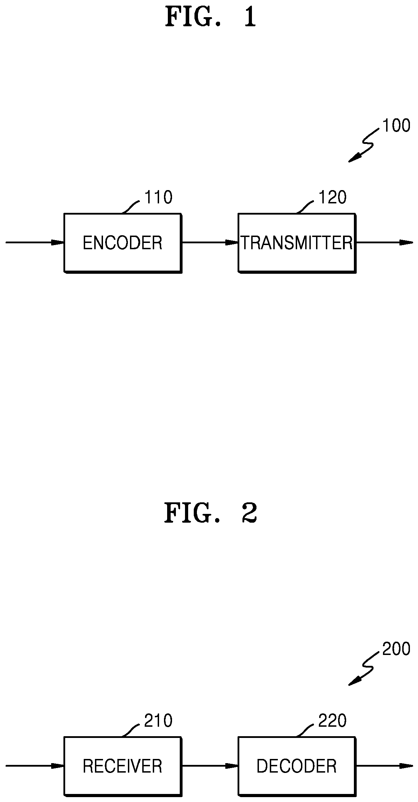

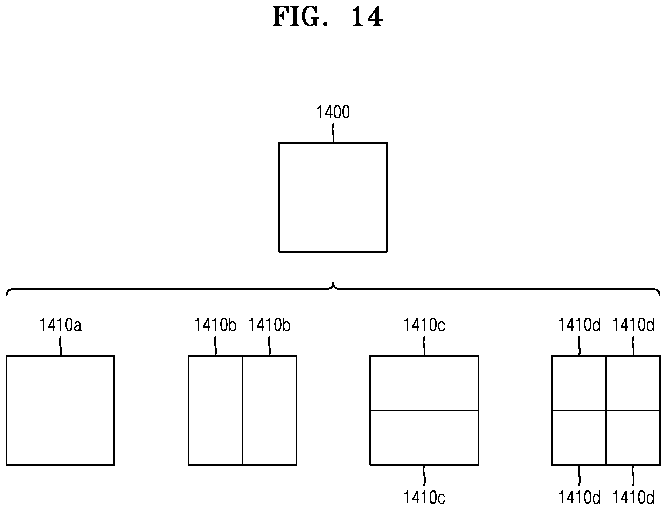

Image encoding and decoding apparatuses and image encoding and decoding methods according to embodiments will now be described with reference to FIGS. 1 to 27. A method of adaptively partitioning a block, according to embodiments, will be described with reference to FIGS. 1 to 13, and a method of determining an image data unit, according to embodiments, will be described with reference to FIGS. 14 to 27.

A method of adaptively partitioning a block, according to embodiments, will now be described in detail with reference to FIGS. 1 to 13.

FIG. 1 is a block diagram of an image encoding apparatus 100 according to an embodiment.

The image encoding apparatus 100 according to an embodiment includes an encoder 110 and a transmitter 120.

According to an embodiment, the encoder 110 may partition image data of a current picture into largest coding units based on the largest size of coding units. Each largest coding unit may include coding units partitioned based on partition information. The image data included in the spatial domain of the largest coding unit according to an embodiment may be hierarchically partitioned based on the partition information. The coding unit may be a square or rectangular block, or an arbitrarily geometric block, and is not limited to a predetermined-sized data unit.

When a picture to be encoded has a large size and thus is encoded in large units, image data may be encoded at a high image-compression rate. However, when a large coding unit is used and the size thereof is fixed, image data may not be efficiently encoded by reflecting continuously changing characteristics thereof.

For example, when image data of a planar area including the sea or the sky is encoded, a compression rate may be increased using a large coding unit. However, when image data of a complicated area including people or buildings is encoded, a compression rate is increased using a small coding unit.

In this regard, the encoder 110 according to an embodiment sets a different-sized largest coding unit for each picture or slice, and sets partition information of one or more coding units partitioned from the largest coding unit. The size of the coding units included in the largest coding unit may be variably set based on the partition information.

The partition information of the one or more coding units may be determined based on calculation of a rate-distortion (R-D) cost. The partition information may be differently determined for each picture or slice, or for each largest coding unit.

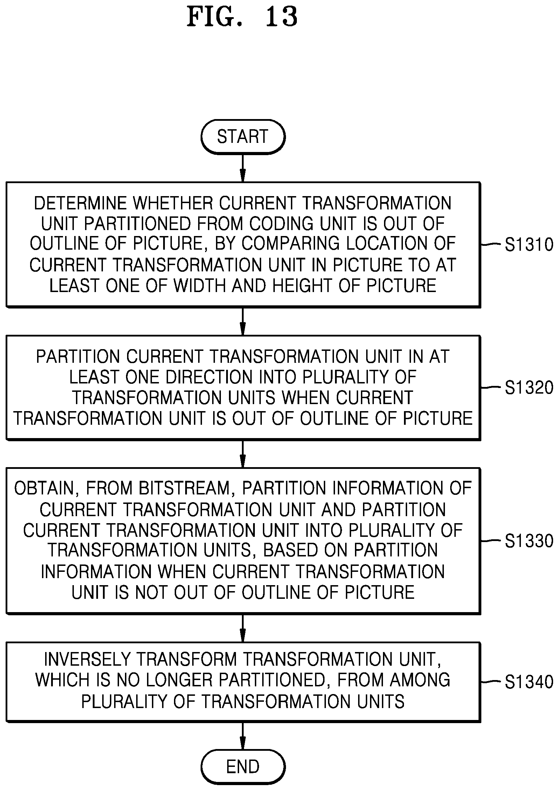

According to an embodiment, the partition information of the coding units partitioned from the largest coding unit may be defined by a block shape and a partition type. A method of determining coding units based on the block shape and the partition type will be described in detail below with reference to FIGS. 13 to 27.

According to an embodiment, the coding units included in the largest coding unit may be predicted or transformed based on different-sized processing units (for example, pixel-domain values may be transformed into frequency-domain values). In other words, the image encoding apparatus 100 may perform a plurality of processing operations for encoding image data, based on various-sized and various-shaped processing units. When processing operations such as prediction, transformation, and entropy encoding are performed to encode the image data, equal-sized processing units may be used for all operations or different-sized processing units may be used for different operations.

According to an embodiment, a prediction mode of a coding unit may include at least one of an intra mode, an inter mode, and a skip mode, and a predetermined prediction mode may be performed on only coding units having a predetermined size or shape. According to an embodiment, each coding unit may be predicted and a prediction mode having the smallest coding error may be selected.

The image encoding apparatus 100 may perform prediction encoding based on a coding unit which is no longer partitioned. Hereinafter, the coding unit which is no longer partitioned and serves as a basic unit of prediction encoding is called a 'prediction unit'.

The image encoding apparatus 100 may transform the image data based on a processing unit having a size different from that of the coding unit. To transform the coding unit, transformation may be performed based on a data unit having a size smaller than or equal to that of the coding unit. Hereinafter, the processing unit serving as a basic unit of transformation is called a 'transformation unit'.

Information used for encoding includes not only the partition information but also prediction information and transformation information. Therefore, the encoder 110 may determine partition information having the smallest coding error, a prediction mode per coding unit, the size of a transformation unit for transformation, etc.

According to an embodiment, the encoder 110 may measure a coding error of the coding unit by using rate-distortion optimization based on Lagrangian multipliers.

According to an embodiment, based on one or more coding units determined by the encoder 110, the transmitter 120 outputs encoded image data of every coding unit and coding mode information per coding unit as a bitstream, and transmits the bitstream to a decoding apparatus.

The encoded image data may be obtained as a result of encoding residual data of the image data.

The coding mode information per coding unit may include partition information, block shape information, partition type information, prediction mode information per coding unit, transformation unit size information, etc.

FIG. 2 is a block diagram of an image decoding apparatus 200 according to an embodiment.

Referring to FIG. 2, the image decoding apparatus 200 according to an embodiment of the present disclosure includes a receiver 210 and a decoder 220.

The receiver 210 according to an embodiment obtains image data per coding unit by parsing a bitstream received by the image decoding apparatus 200, and outputs the image data to the decoder 220. The receiver 210 may extract information about a current picture or slice from a parameter set raw byte sequence payload (RBSP) for the current picture or slice.

The receiver 210 according to an embodiment extracts information about the size of a largest coding unit, partition information of coding units partitioned from the largest coding unit, and coding mode information of the coding unit, by parsing the bitstream received by the image decoding apparatus 200. The partition information and the coding mode information are output to the decoder 220. The coding mode information may include block shape information, partition type information, prediction mode information per coding unit, transformation unit size information, etc.

The decoder 220 according to an embodiment restores the current picture by decoding the image data of every coding unit based on determined coding units.

Based on the partition information of the coding units partitioned from the largest coding unit, the decoder 220 may decode the coding units included in the largest coding unit. The decoding operation may include inverse quantization, inverse transformation, and motion prediction including intra prediction and motion compensation.

The decoder 220 according to an embodiment may generate residual data by performing inverse quantization and inverse transformation on each coding unit based on the transformation unit size information of the coding unit. The decoder 220 may perform intra prediction or inter prediction based on the prediction mode information of the coding unit. The decoder 220 may predict a prediction unit serving as a basic unit of prediction, and then generate restored data by using the predicted data and the residual data of the coding unit.

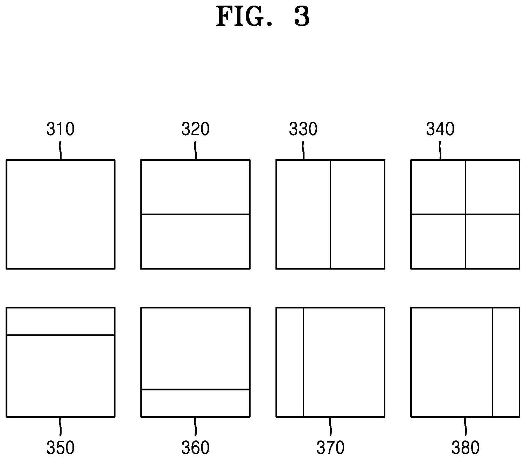

FIG. 3 illustrates various shapes of prediction units partitioned from a coding unit.

In general, as coding mode information, partition type information, prediction mode information, etc. may be encoded and transmitted for each coding unit. Herein, the partition type information may be information about a partition type of a prediction unit partitioned from a current coding unit and serving as a data unit for prediction-encoding the current coding unit.

Referring to FIG. 3, various partition types of prediction units partitioned from a coding unit are illustrated. For example, when a 2N×2N coding unit (N is a positive integer) is no longer partitioned, a 2N×2N prediction unit 310 is obtained. Prediction units of a 2N×N partition type 320, an N×2N partition type 330, an N×N partition type 340, etc. may be partitioned from the 2N×2N coding unit. The partition types according to an embodiment may include not only symmetrical partition types indicating prediction units obtained by symmetrically partitioning a height and width of a coding unit, but also asymmetrical partition types such as a 2N×nU partition type 350, a 2N×nD partition type 360, a nL×2N partition type 370, and an nR×2N partition type 380. That is, the partition type of the prediction unit may selectively include asymmetrical partition types such as 1:n and n:1, geometric partition types, arbitrary partition types, etc. In general, a symmetrical partition type may be used in an intra mode and both a symmetrical partition type and an asymmetrical partition type may be used in an inter mode.

A prediction mode of the prediction unit may include at least one of an intra mode, an inter mode, and a skip mode. For example, the intra mode and the inter mode may be performed on only 2N×2N, 2N×N, N×2N, and N×N blocks. The skip mode may be performed on only a 2N×2N block. Encoding may be independently performed on every prediction unit in the coding unit and a prediction mode having the smallest coding error may be selected.

However, when the above-defined partition type information of the prediction unit is signaled from an image encoding apparatus to an image decoding apparatus, prediction may be performed using only a limited partition type and thus image characteristics may not be easily and appropriately reflected.

The present disclosure proposes a technology capable of increasing overall coding efficiency based on an adaptive block partitioning method considering image characteristics.

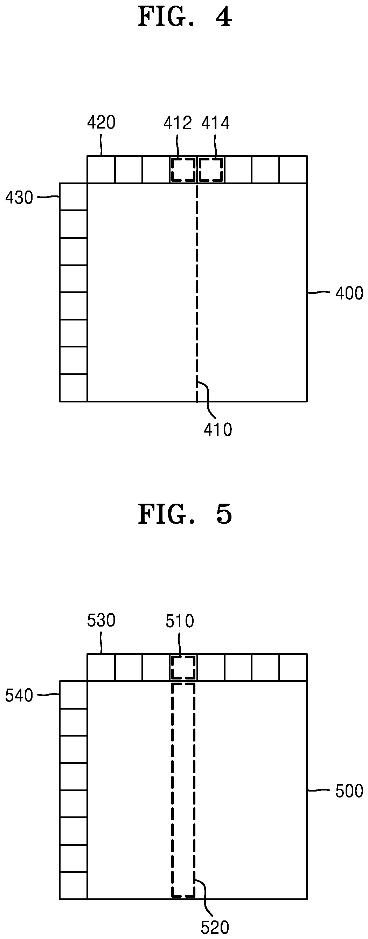

FIG. 4 illustrates adaptive partitioning of a coding unit 400, according to a first embodiment.

Referring to FIG. 4, a point indicating a location of a boundary 410 for partitioning the coding unit 400 may be selected based on a cost function using reference pixels 420 and 430 adjacent to the coding unit 400. According to an embodiment, the cost function may be a function for calculating a gradient of reference pixel values. Herein, the gradient may be expressed as a difference between adjacent reference pixel values. The reference pixels are pixels restored previously to a current coding unit. For example, pixels adjacent to a top side and a left side of the coding unit 400 are used in the current embodiment, but locations of the reference pixels may vary depending on a scan order (or a processing order).

For example, a location having the highest gradient of reference pixel values from among the reference pixels 420 and 430 adjacent to the coding unit 400 may be a boundary between a reference pixel 412 and a reference pixel 414. In this case, the boundary 410 for partitioning the coding unit 400 may be determined in a predetermined direction from the boundary between the reference pixel 412 and the reference pixel 414. At this time, a location between the reference pixel 412 and the reference pixel 414 serves as a 'partition location' indicating the location of the boundary 410 for partitioning the coding unit 400. That is, the partition location according to an embodiment may indicate a location having the highest gradient of pixel values from among reference pixels. Alternatively, the partition location may be selected as one of multiple partition location candidates from among reference pixels. For example, one of two partition location candidates having the highest gradient may be selected. However, in this case, information for selecting one of the multiple partition location candidates may be transmitted from the image encoding apparatus 100 to the image decoding apparatus 200 as explicit information.

According to an embodiment, when the partition location of the coding unit 400 is determined using the gradient of reference pixel values, the boundary 410 for partitioning the coding unit 400 may indicate a boundary line between integer pixels.

According to an embodiment, a direction of the boundary 410 for partitioning the coding unit 400 may be a direction perpendicular to the top side or the left side of the coding unit 400. However, the direction of the boundary 410 is not limited to the above-described direction. According to another embodiment, the direction of the boundary 410 may be a direction passing through the center of the coding unit 400 from the partition location. The direction of the boundary 410 may be a linear direction having a predetermined angle from the partition location. For example, the direction of the boundary 410 may be a direction having an angle of 45° or -45° between the partition location and the coding unit 400 with respect to the partition location. According to an embodiment, when the direction of the boundary 410 is selected as one of two or more directions, information about the selected direction may be signaled from the image encoding apparatus 100 to the image decoding apparatus 200.

The direction of the boundary 410 for partitioning the coding unit 400 may be pre-defined. For example, the direction of the boundary 410 may be pre-defined as a vertical direction or a horizontal direction. When the direction of the boundary 410 is pre-defined as a vertical direction, when the location of the boundary 410 for partitioning the coding unit 400 is determined, the gradient may be calculated using only the reference pixels 420 adjacent to the top side of the coding unit 400. Otherwise, when the direction of the boundary 410 is pre-defined as a horizontal direction, when the location of the boundary 410 for partitioning the coding unit 400 is determined, the gradient may be calculated using only the reference pixels 430 adjacent to the left side of the coding unit 400.

According to another embodiment, information about the direction of the boundary 410 for partitioning the coding unit 400 may be signaled from the image encoding apparatus 100 to the image decoding apparatus 200.

According to another embodiment, when the direction of the boundary 410 is determined, only reference pixels having a higher variance value from among the reference pixels 420 and 430 adjacent to the coding unit 400 may be used. For example, a variance value of the reference pixels 420 adjacent to the top side of the coding unit 400 may be compared to a variance value of the reference pixels 430 adjacent to the left side of the coding unit 400 and the direction of the boundary 410 may be determined using one or more pixels having a higher variance value.

According to an embodiment, when the partition location and the boundary direction are determined, a plurality of prediction units may be obtained by partitioning the coding unit 400 along the boundary 410. Thereafter, each prediction unit may be predicted based on a prediction mode of the coding unit 400.

The above-described operations for determining the partition location and obtaining the prediction units by partitioning the coding unit 400 may be performed by the image encoding apparatus 100. In this case, the location and direction of the boundary 410 for partitioning the coding unit 400 are based on characteristics of pixels adjacent to the coding unit 400. Therefore, the image encoding apparatus 100 does not need to generate partition type information of the prediction unit, and does not need to transmit information about the size or partition type of the prediction unit to the image decoding apparatus 200. Likewise, the image decoding apparatus 200 may determine the partition type and size of the prediction unit based on characteristics of pixels adjacent to the coding unit 400, without obtaining the partition type information of the prediction unit from a bitstream.

According to the afore-described embodiment, a block may be adaptively partitioned based on image characteristics without being limited to a partition type of a prediction unit, which is defined by a general image compression technology. Therefore, a partition type of a prediction unit may reflect image characteristics and thus overall coding efficiency may be increased.

FIG. 5 illustrates adaptive partitioning of a coding unit 500, according to a second embodiment.

Referring to FIG. 5, a reference pixel 510 indicating a location of a boundary 520 for partitioning the coding unit 500 may be selected based on a cost function using reference pixels 530 and 540 adjacent to the coding unit 500. According to an embodiment, the cost function may indicate an algorithm for detecting an edge from among reference pixels. Herein, various known edge detection filters (e.g., Sobel, Canny, Deriche, Differential, and Prewitt filters) may be used to detect the edge.

Specifically, for example, an absolute value of a value obtained by applying a [1 2 1]/4 smoothing filter to the reference pixels 530 and 540 adjacent to the coding unit 500, and then applying a [1 0 -1] filter (or a [1 -1] filter) to every reference pixel, may be used as the cost function. In this case, a location of the detected edge may be a location of a pixel having the highest cost value.

For example, the location of the edge detected from among the reference pixels 530 and 540 adjacent to the coding unit 500 may be a location of the reference pixel 510. In this case, the boundary 520 for partitioning the coding unit 500 may be determined in a predetermined direction from the location of the reference pixel 510. At this time, the location of the reference pixel 510 serves as a 'partition location' indicating the location of the boundary 520 for partitioning the coding unit 500. That is, the partition location according to an embodiment may be a location of a reference pixel detected as an edge, from among reference pixels. Alternatively, the partition location may be selected as one of multiple partition location candidates from among reference pixels. For example, one of multiple partition location candidates detected as edges may be selected. However, in this case, information for selecting one of the multiple partition location candidates may be transmitted from the image encoding apparatus 100 to the image decoding apparatus 200 as explicit information.

According to an embodiment, when the partition location of the coding unit 500 is determined using the edge detection algorithm, the boundary 520 for partitioning the coding unit 500 may indicate integer pixels.

According to an embodiment, a direction of the boundary 520 for partitioning the coding unit 500 may be a direction perpendicular to a top side or a left side of the coding unit 500. However, the direction of the boundary 520 is not limited to the above-described direction. According to another embodiment, the direction of the boundary 520 may be a direction passing through the center of the coding unit 500 from the partition location. The direction of the boundary 520 may be a linear direction having a predetermined angle from the partition location. For example, the direction of the boundary 520 may be a direction having an angle of 45° or -45° between the partition location and the coding unit 500 with respect to the partition location. According to an embodiment, when the direction of the boundary 520 is selected as one of two or more directions, information about the selected direction may be signaled from the image encoding apparatus 100 to the image decoding apparatus 200.

The direction of the boundary 520 for partitioning the coding unit 500 may be pre-defined. For example, the direction of the boundary 520 may be pre-defined as a vertical direction or a horizontal direction. When the direction of the boundary 520 is pre-defined as a vertical direction, when the location of the boundary 520 for partitioning the coding unit 500 is determined, the edge detection algorithm may be applied using only the reference pixels 530 adjacent to the top side of the coding unit 500. Otherwise, when the direction of the boundary 520 is pre-defined as a horizontal direction, when the location of the boundary 520 for partitioning the coding unit 500 is determined, the edge detection algorithm may be applied using only the reference pixels 540 adjacent to the left side of the coding unit 500.

According to another embodiment, information about the direction of the boundary 520 for partitioning the coding unit 500 may be signaled from the image encoding apparatus 100 to the image decoding apparatus 200.

According to another embodiment, when the direction of the boundary 520 is determined, only reference pixels having a higher variance value from among the reference pixels 530 and 540 adjacent to the coding unit 500 may be used. For example, a variance value of the reference pixels 530 adjacent to the top side of the coding unit 500 may be compared to a variance value of the reference pixels 540 adjacent to the left side of the coding unit 500 and the direction of the boundary 520 may be determined using pixels having a higher variance value.

According to an embodiment, when the partition location and the boundary direction are determined, a plurality of prediction units may be obtained by partitioning the coding unit 500 along the boundary 520. Thereafter, each prediction unit may be predicted based on a prediction mode of the coding unit 500.

The above-described operations for determining the partition location and obtaining the prediction units by partitioning the coding unit 500 may be performed by the image encoding apparatus 100. In this case, the location and direction of the boundary 520 for partitioning the coding unit 500 are based on characteristics of pixels adjacent to the coding unit 500. Therefore, the image encoding apparatus 100 does not need to generate partition type information of the prediction unit, and does not need to transmit information about the size or partition type of the prediction unit to the image decoding apparatus 200. Likewise, the image decoding apparatus 200 may determine the partition type and size of the prediction unit based on characteristics of pixels adjacent to the coding unit 500, without obtaining the partition type information of the prediction unit from a bitstream.

According to the afore-described embodiment, a block may be adaptively partitioned based on image characteristics without being limited to a partition type of a prediction unit, which is defined by a general image compression technology. Therefore, a partition type of a prediction unit may reflect image characteristics and thus overall coding efficiency may be increased.

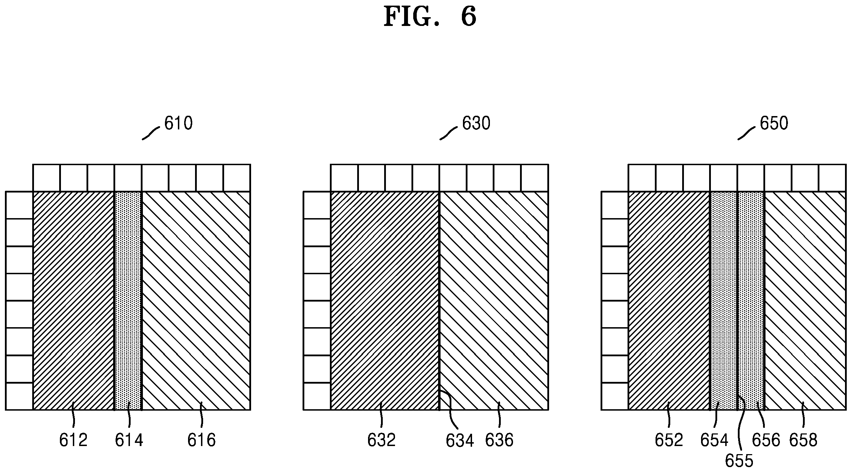

FIG. 6 illustrates a method of predicting a boundary area for partitioning a coding unit 610, 630, or 650, according to an embodiment.

In general, when a plurality of prediction units are obtained by partitioning a coding unit, motion prediction including intra prediction and motion compensation is performed on each prediction unit based on a prediction mode thereof. However, since predicted values of pixels may rapidly vary across a boundary for partitioning the coding unit, the predicted values of the pixels in or adjacent to the boundary may be smoothed.

Referring to FIG. 6, a boundary for partitioning the coding unit 610, 630, or 650 may be determined in various ways. The boundary according to an embodiment may indicate integer pixels 614 located in a predetermined direction from a partition location, or a boundary 634 or 655 between integer pixels.

According to an embodiment, when the boundary 614 of the coding unit 610 indicates integer pixels, prediction units 612 and 616 are partitioned by the boundary 614. However, in this case, some pixels (i.e., pixels corresponding to the boundary 614 in the coding unit 610) are not included any of the prediction units 612 and 616. Herein, predicted values of the prediction units 612 and 616 adjacent to the boundary 614 may be used to predict the pixels corresponding to the boundary 614. For example, predicted values of the pixels corresponding to the boundary 614 may be set as average predicted values of the prediction units 612 and 616 partitioned by the boundary 614.

According to an embodiment, when the boundary 634 of the coding unit 630 indicates a boundary between integer pixels, since prediction units 632 and 636 are clearly partitioned by the boundary 634, every pixel in the coding unit 630 is included in one of the prediction units 632 and 636. Therefore, prediction on the prediction units 632 and 636 is sufficient for the coding unit 630.

According to another embodiment, when the boundary 655 of the coding unit 650 indicates a boundary between integer pixels, prediction units 652 and 658 are partitioned by the boundary 655. In this case, to smooth an area adjacent to the boundary 655, predicted values of pixels 654 and 656 adjacent to the boundary 655 may be expressed using predicted values of the prediction units 652 and 658. For example, the predicted values of the pixels 654 and 656 adjacent to the boundary 655 may be set as average predicted values of the partitioned prediction units 652 and 658. As another example, the pixels 654 adjacent to a side of the boundary 655 may be calculated by applying a weight to the predicted values of the prediction unit 652 adjacent to the pixels 654, and the pixels 656 adjacent to the other side of the boundary 655 may be calculated by applying a weight to the predicted values of the prediction unit 658 adjacent to the pixels 656.

As described above, information indicating whether to express a boundary as the integer pixels 614 or as the boundary 634 or 655 between integer pixels may be signaled from the image encoding apparatus 100 to the image decoding apparatus 200 as explicit information. Alternatively, the information indicating whether to express a boundary as the integer pixels 614 or as the boundary 634 or 655 between integer pixels may be derived from information about pixels adjacent to a coding unit, without transmitting explicit information.

According to the afore-described embodiment, the encoder 110 of the image encoding apparatus 100 may determine a partition location indicating a location of a boundary for partitioning a coding unit, based on at least one of a location having the highest pixel gradient and a location of a detected edge from among reference pixels. Likewise, the decoder 220 of the image decoding apparatus 200 may determine a partition location indicating a location of a boundary for partitioning a coding unit, based on at least one of a location having the highest pixel gradient and a location of a detected edge from among reference pixels. When a prediction mode of the coding unit is an inter prediction mode, a motion vector may be used to express the boundary for partitioning the coding unit. A shift of the location of the boundary may be expressed using a motion vector in units of integer pixels or in units of 1/2 or 1/4 pixels.

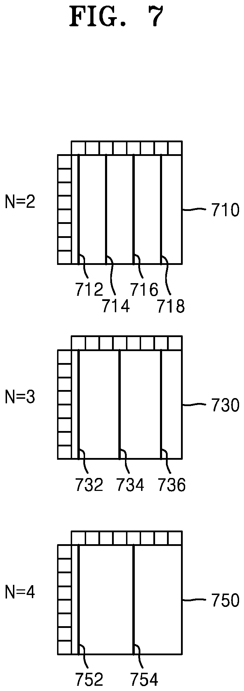

FIG. 7 illustrates a method of partitioning a coding unit 710, 730, or 750 by a predetermined number of pixels, according to an embodiment.

According to an embodiment, the coding unit 710, 730, or 750 may be partitioned by N pixels. For example, referring to FIG. 7, when the coding unit 710 having an 8×8 size is partitioned by two pixels in a vertical direction, five prediction units may be obtained. When the coding unit 730 having an 8×8 size is partitioned by three pixels in a vertical direction, four prediction units may be obtained. When the coding unit 750 having an 8×8 size is partitioned by four pixels in a vertical direction, three prediction units may be obtained.

That is, the N pixels may indicate the number of pixels by which a coding unit is partitioned. The N pixels may be N integer pixels or N sub-pixels. According to an embodiment, N may be set to a pre-determined value or may vary depending on the size of the coding unit. For example, N may have a value 1 when the coding unit has a size of 8×8, have a value 2 when the coding unit has a size of 16×16, have a value 4 when the coding unit has a size of 32×32, have a value 8 when the coding unit has a size of 64×64, have a value 16 when the coding unit has a size of 128×128, and have a value 32 when the coding unit has a size of 256×256. As another example, N may have a value 2 when the coding unit has a size equal to or smaller than 16×16, and have a value 4 when the coding unit has a size equal to or larger than 32×32. Alternatively, N may be set to a predetermined value irrespective of the size of the coding unit.

Although the coding unit 710, 730, or 750 is partitioned in a vertical direction in FIG. 7 for convenience of explanation, various partition directions such as a horizontal direction, a vertical direction, and a direction having a predetermined inclination may be used.

As illustrated in FIG. 7, when a coding unit is partitioned by a predetermined number of pixels, information indicating an initial reference location from among one or more boundaries for partitioning the coding unit needs to be signaled.

For example, four boundaries 712, 714, 716, and 718 are determined for the coding unit 710 corresponding to N=2 and, in this case, information indicating a location of the initial boundary 712 may be signaled from the image encoding apparatus 100 to the image decoding apparatus 200. The location of the initial boundary 712 may indicate a location of a boundary, which is closest to a top left pixel of the coding unit 710. The information indicating the location of the initial boundary 712 may be called 'reference partition location information'. Assuming that a location of the top left pixel of the coding unit 710 is an origin (0,0), a reference partition location may be expressed as a distance from the origin. For example, the reference partition location may be expressed as a coordinate such as (x,0) or (y,0).

Likewise, three boundaries 732, 734, and 736 are determined for the coding unit 730 corresponding to N=3, and information about a location of the initial boundary 732 may be signaled from the image encoding apparatus 100 to the image decoding apparatus 200 as the reference partition location information. Two boundaries 752 and 754 are determined for the coding unit 750 corresponding to N=4, and information about a location of the initial boundary 752 may be signaled from the image encoding apparatus 100 to the image decoding apparatus 200 as the reference partition location information.

According to another embodiment, a coding unit may be partitioned by some boundaries selected from among one or more boundaries for partitioning the coding unit. That is, when the number of boundaries for partitioning the coding unit is M, the coding unit may be partitioned to all partition types obtainable by combining the M boundaries. In this case, the M boundaries do not need to be provided at equal intervals and may be provided at different intervals.

According to an embodiment, when the coding unit is partitioned by a predetermined number of pixels, the reference partition location may be based on a location of a reference pixel selected by applying a cost function to reference pixels adjacent to the coding unit. That is, when a partition location for partitioning a coding unit is determined as described above in relation to FIGS. 4 and 5, the determined partition location may be used as the reference partition location in FIG. 7. According to another embodiment, a partition location of a coding unit adjacent to a top side or a left side of a current coding unit may be set as the reference partition location of the current coding unit.

As described above, a coding unit may be partitioned using various schemes, and the schemes may be used in combination. According to an embodiment, a flag for adaptively determining a partitioning method of the coding unit may be defined. For example, when the flag has a value '1', as described above in relation to FIGS. 4 and 5, a partition location of the coding unit may be determined based on reference pixels adjacent to the coding unit, and the coding unit may be partitioned based on the partition location. Otherwise, when the flag has a value '0', as described above in relation to FIG. 7, the coding unit may be partitioned by a predetermined number of pixels based on a reference partition location. According to an embodiment, the flag for adaptively determining the partitioning method of the coding unit may be signaled from the image encoding apparatus 100 to the image decoding apparatus 200.

According to an embodiment, the encoder 110 of the image encoding apparatus 100 may use at least one of an intra mode, an inter mode, and a skip mode to predict prediction units partitioned from a coding unit. A predetermined prediction mode may be performed on only coding units having a predetermined size or shape. According to an embodiment, each coding unit may be predicted and a prediction mode having the smallest coding error may be selected. Likewise, the decoder 220 of the image decoding apparatus 200 may use at least one of an intra mode, an inter mode, and a skip mode to predict prediction units partitioned from a coding unit.

In intra prediction, a predicted sample of a current block may be derived based on pixels of an adjacent block in a picture including the current block. In this case, (i) an average of reference samples adjacent to the current block or a predicted sample based on interpolation may be derived, or (ii) the predicted sample may be derived based on a reference sample located in a predetermined direction from a pixel to be predicted, from among blocks adjacent to the current block. In addition, a prediction mode to be applied to the current block may be determined using a prediction mode applied to the adjacent block.

In inter prediction, predicted samples of a current block may be derived based on samples specified on a reference picture by a motion vector. In this case, the predicted samples of the current block may be derived by applying one of a skip mode, a merge mode, and a motion vector prediction (MVP) mode. In the skip mode and the merge mode, motion information of an adjacent block may be used as motion information of a current block. In the skip mode, unlike the merge mode, residual data between predicted samples and restored samples is not transmitted. In the MVP mode, residual data from a motion vector of a current block may be encoded using a motion vector of an adjacent block as an MVP predictor.

The same prediction mode may be applied to all of a plurality of prediction units partitioned from a coding unit, or different prediction modes may be applied to the prediction units.

According to an embodiment, prediction information of the prediction units partitioned from the coding unit may be stored based on the size or shape of each prediction unit. For example, when the coding unit is partitioned in a vertical direction, the prediction information may be stored based on a partition type of $N \times 2N$. When the coding unit is partitioned in a horizontal direction, the prediction information may be stored based on a partition type of 2NxN. According to another embodiment, the prediction information may be stored based on the same shape as the shape of the prediction units partitioned from the coding unit. In this case, information about inter or intra prediction needs to be signaled for each prediction unit.

The coding unit partitioning method proposed by the present disclosure may be used together with a generally defined partition mode (e.g., a partition mode in High Efficiency Video Coding (HEVC)). Therefore, an additional flag may be defined for distinguishment from the generally defined partition mode. For example, when the flag has a value '0', the coding unit is partitioned using the generally defined partition mode. When the flag has a value '1', the coding unit partitioning method proposed by the present disclosure may be used.

Although the coding unit is partitioned in one direction in the above description, the coding unit may also be partitioned in various directions, and the partition directions may cross each other. Therefore, variously partitioned prediction units may be present in the coding unit.

A method of partitioning a transformation unit in a case when the transformation unit partitioned from a coding unit is out of an outline of a picture will now be described.

In an image encoding or decoding operation, a coding unit or a transformation unit may not be accurately aligned with an outline of a picture. In general, when a coding unit lies on an outline of a picture, the coding unit is automatically partitioned to be aligned with the outline of the picture. However, when the coding unit has a large size, the coding unit needs to be partitioned into a quite large number of coding units to be aligned with the outline of the picture. In this case, since a number of prediction parameters corresponding to the number of the partitioned coding units need to be transmitted, an increase in transmission overhead and a reduction in image coding efficiency may be caused.

To solve the above problem, a method of automatically partitioning only a transformation unit, which serves as a basic unit of transformation, instead of automatically partitioning a coding unit, in a case when the coding unit lies on an outline of a picture is proposed.

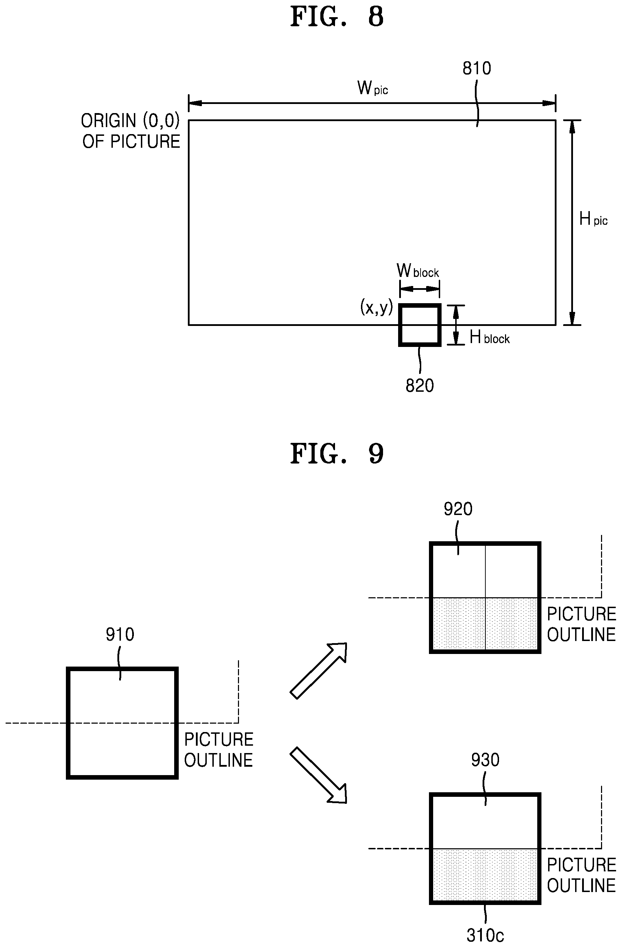

FIG. 8 illustrates an operation of determining whether a current transformation unit 820 expands over an outline of a current picture 810, according to an embodiment.

Referring to FIG. 8, when at least one of a width '$W_{pic}$' and a height '$H_{pic}$' of the current picture 810 does not correspond to a width and/or a height of transformation units, the transformation units may extend across at least one of a right outline and a bottom outline of the current picture 810.

According to an embodiment, the current transformation unit 820 may extend across an outline of the current picture 810, and only a part of the current transformation unit 820, which is not out of the outline of the current picture 810, may be transformed (or inversely transformed). Therefore, it needs to be determined whether the current transformation unit 820 is out of the outline of the current picture 810. Herein, the current transformation unit 820 may be one of one or more transformation units partitioned from a coding unit.

According to an embodiment, to determine whether the current transformation unit 820 is out of the outline of the current picture 810, a location of the current transformation unit 820 in the current picture 810 may be compared to at least one of the width 'W$_{pic}$' and the height 'H$_{pic}$' of the current picture 810. For example, a distance between a left pixel of the current picture 810 and a right pixel of the current transformation unit 820 may be compared to the width 'W$_{pic}$' of the current picture 810, and a distance between a top pixel of the current picture 810 and a bottom pixel of the current transformation unit 820 may be compared to the height 'H$_{pic}$' of the current picture 810.

According to an embodiment, the location of the current transformation unit 820 in the current picture 810 may be defined as a coordinate (x,y). For example, a location indicating a top left pixel of the current transformation unit 820 may be set as the location of the current transformation unit 820. In addition, when a coordinate of a location indicating a top left pixel of the current picture 810 is an origin (0,0) of the current picture 810, the current transformation unit 820 in the current picture 810 may be located at the coordinate (x,y) from the origin (0,0).

Equations 1 to 3 may be used to determine whether the current transformation unit 820 is out of the outline of the current picture 810.

[Equation 1]

$$if((x+W_{block}-1 >= W_{pic}) \ || \ (y+H_{block}-1 >= H_{pic}))$$

[Equation 2]

$$if((x+W_{block}-1 >= W_{pic}))$$

[Equation 3]

$$if((y+H_{block}-1 >= H_{pic}))$$

In Equations 1 to 3, x denotes an x-coordinate location of the current transformation unit 820 from an origin of the current picture 810, and y denotes a y-coordinate location of the current transformation unit 820 from the origin of the current picture 810. W$_{block}$ denotes a width of the current transformation unit 820, and H$_{block}$ denotes a height of the current transformation unit 820. W$_{pic}$ denotes a width of the current picture 810, and H$_{pic}$ denotes a height of the current picture 810.

According to an embodiment, when Equation 1 is satisfied, it is determined that the current transformation unit 820 is out of the outline of the current picture 810. When Equation 2 is satisfied, it is determined that the current transformation unit 820 is out of the right outline of the current picture 810. When Equation 3 is satisfied, it is determined that the current transformation unit 820 is out of the bottom outline of the current picture 810.

In the afore-described embodiment, a fact that a transformation unit is out of an outline of a picture may also mean that the transformation unit lies on the outline of the picture.

FIG. 9 illustrates a current transformation unit 910 extending across an outline of a picture, according to an embodiment.

According to an embodiment, when the current transformation unit 910 is out of the outline of the picture, the current transformation unit 910 may be partitioned to various shapes based on the shape of the outline of the picture, which overlaps with the current transformation unit 910. When the current transformation unit 910 extending across the outline of the picture is partitioned, partition information of the current transformation unit 910 is not signaled from the image encoding apparatus 100 to the image decoding apparatus 200. That is, the image encoding apparatus 100 does not transmit partition information of a transformation unit extending across an outline of a picture, and the image decoding apparatus 200 does not parse partition information of a transformation unit extending across an outline of a picture. Although a first transformation unit is determined as extending across an outline of a picture and thus partition information of the first transformation unit is not transmitted, when a second transformation unit partitioned from the first transformation unit is determined as being in an internal area of a picture, the image encoding apparatus 100 may transmit partition information of the second transformation unit. Likewise, although a first transformation unit is determined as extending across an outline of a picture and thus partition information of the first transformation unit is not obtained, when a second transformation unit partitioned from the first transformation unit is determined as being in an internal area of a picture, the image decoding apparatus 200 may obtain partition information of the second transformation unit.

According to an embodiment, when the current transformation unit 910 is out of the outline of the picture, the current transformation unit 910 may be partitioned in vertical and horizontal directions into four square transformation units 920. According to an embodiment, the partitioning operation may be repeated until the transformation units 920 do not extend across the outline of the picture.

According to another embodiment, when the current transformation unit 910 is out of the outline of the picture, the current transformation unit 910 may be partitioned in a vertical or horizontal direction into two non-square transformation units 930. In this case, the transformation units 930 may be partitioned from the current transformation unit 910 to be accurately aligned with the outline of the picture. When the transformation units 930 are not aligned with the outline of the picture, the partitioning operation may be repeated until the transformation units 930 do not extend across the outline of the picture.

In the afore-described embodiment, the current transformation unit 910 may refer to one of transformation units partitioned from a coding unit. The current transformation unit 910 and the transformation units 920 or 930 partitioned from the current transformation unit 910 may have a square shape or a non-square shape.

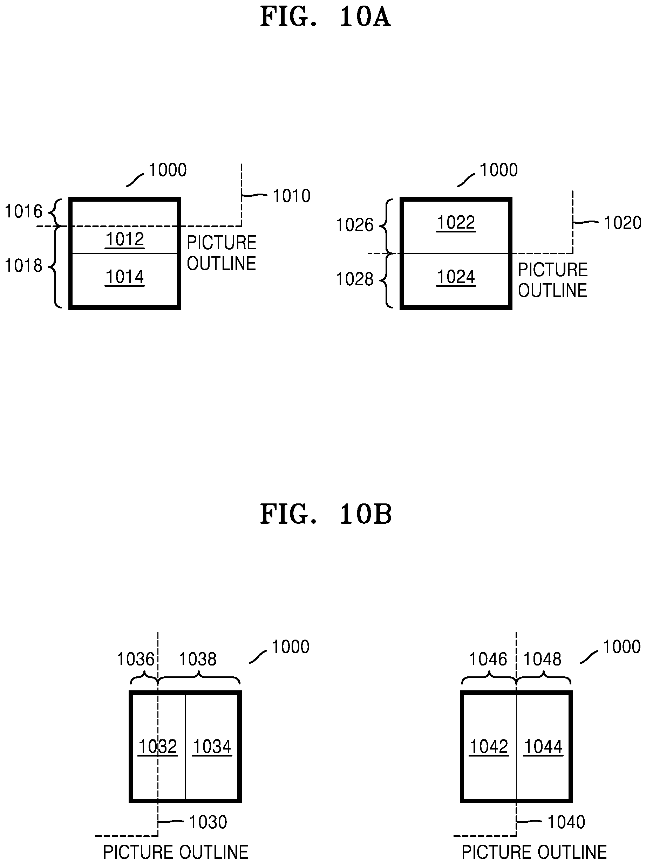

In the afore-described embodiment, when the current transformation unit 910 is out of the outline of the picture, partition information of the current transformation unit 910 may not be signaled. In this case, the current transformation unit 910 may be recursively partitioned until the current transformation unit 910 is not out of the outline of the picture based on a predetermined rule. Various rules for partitioning a transformation unit extending across an outline of a picture will now be described in detail with reference to FIGS. 10A to 10C.

FIGS. 10A to 10C illustrate methods of partitioning a current transformation unit 1000 extending across an outline 1010, 1020, 1030, 1040, 1050, 1060, 1070, or 1080 of a picture, according to embodiments.

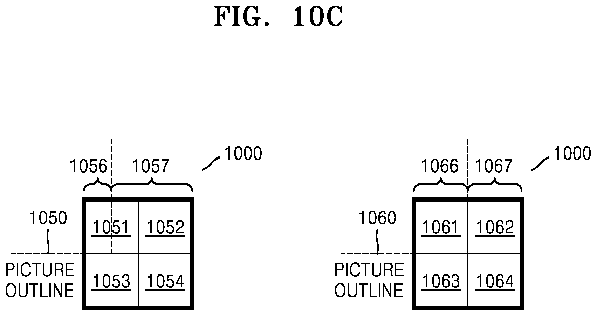

Referring to FIGS. 10A to 10C, the current transformation unit 1000 is out of the outline 1010, 1020, 1030, 1040, 1050, 1060, 1070, or 1080 of the picture in various ways. FIG. 10A illustrates that the current transformation unit 1000 is out of a horizontal outline 1010 or 1020 of the picture, FIG. 10B illustrates that the current transformation unit 1000 is out of a vertical outline 1030 or 1040 of the picture, and FIG. 10C illustrates that the current transformation unit 1000 is out of a corner outline 1050, 1060, 1070, or 1080 of the picture.

Referring to FIG. 10A, the current transformation unit 1000 is out of the horizontal outline 1010 or 1020 of the picture. When the current transformation unit 1000 is out of the horizontal outline 1010 of the picture, an upper area of the current transformation unit 1000 corresponds to an internal area 1016 of the picture, and a lower area of the current transformation unit 1000 corresponds to an external area 1018 of the picture. When the current transformation unit 1000 is out of the horizontal outline 1020 of the picture, an upper area of the current transformation unit 1000 corresponds to an internal area 1026 of the picture, and a lower area of the current transformation unit 1000 corresponds to an external area 1028 of the picture.

According to an embodiment, when the current transformation unit 1000 is out of the horizontal outline 1010 or 1020 of the picture, the current transformation unit 1000 may be partitioned in a horizontal direction into two transformation units 1012 and 1014, or 1022 and 1024. In this case, partition information is not required to partition the current transformation unit 1000.

According to an embodiment, one of the transformation units 1012 and 1014 partitioned in a horizontal direction (e.g., the transformation unit 1012) may still extend across the horizontal outline 1010 of the picture. The transformation unit 1012 extending across the horizontal outline 1010 of the picture may be recursively partitioned without using partition information based on a predetermined rule until the transformation unit 1012 is not out of the horizontal outline 1010 of the picture. However, the transformation unit 1014 outside the horizontal outline 1010 of the picture corresponds to the external area 1018 of the picture, and thus is not transformed (or inversely transformed).

According to an embodiment, a boundary between the two transformation units 1022 and 1024 partitioned in a horizontal direction may match the horizontal outline 1020 of the picture. In this case, the transformation unit 1022 inside the horizontal outline 1020 of the picture may be no longer partitioned and be transformed (or inversely transformed), or may be partitioned into a plurality of transformation units by using partition information parsed from a bitstream. However, the transformation unit 1024 outside the horizontal outline 1020 of the picture corresponds to the external area 1028 of the picture, and thus is not transformed (or inversely transformed).

Referring to FIG. 10B, the current transformation unit 1000 is out of the vertical outline 1030 or 1040 of the picture. When the current transformation unit 1000 is out of the vertical outline 1030 of the picture, a left area of the current transformation unit 1000 corresponds to an internal area 1036 of the picture, and a right area of the current transformation unit 1000 corresponds to an external area 1038 of the picture. When the current transformation unit 1000 is out of the vertical outline 1040 of the picture, a left area of the current transformation unit 1000 corresponds to an internal area 1046 of the picture, and a right area of the current transformation unit 1000 corresponds to an external area 1048 of the picture.

According to an embodiment, when the current transformation unit 1000 is out of the vertical outline 1030 or 1040 of the picture, the current transformation unit 1000 may be partitioned in a vertical direction into two transformation units 1032 and 1034, or 1042 and 1044. In this case, partition information is not required to partition the current transformation unit 1000.

According to an embodiment, one of the transformation units 1032 and 1034 partitioned in a vertical direction (e.g., the transformation unit 1032) may still extend across the vertical outline 1030 of the picture. The transformation unit 1032 extending across the vertical outline 1030 of the picture may be recursively partitioned without using partition information based on a predetermined rule until the transformation unit 1032 is not out of the vertical outline 1030 of the picture. However, the transformation unit 1034 outside the vertical outline 1030 of the picture corresponds to the external area 1038 of the picture, and thus is not transformed (or inversely transformed).

According to an embodiment, a boundary between the transformation units 1042 and 1044 partitioned in a vertical direction may match the vertical outline 1040 of the picture. In this case, the transformation unit 1042 inside the vertical outline 1040 of the picture may be no longer partitioned and be transformed (or inversely transformed), or may be partitioned into a plurality of transformation units by using partition information parsed from a bitstream. However, the transformation unit 1044 outside the vertical outline 1040 of the picture corresponds to the external area 1048 of the picture, and thus is not transformed (or inversely transformed).

Referring to FIG. 10C, the current transformation unit 1000 may extend across the corner outline 1050 or 1060 of the picture. When the current transformation unit 1000 is out of the corner outline 1050 of the picture, a top left area of the current transformation unit 1000 corresponds to an internal area 1056 of the picture, and the other area of the current transformation unit 1000 corresponds to an external area 1057 of the picture. When the current transformation unit 1000 is out of the corner outline 1060 of the picture, a top left area of the current transformation unit 1000 corresponds to an internal area 1066 of the picture, and the other area of the current transformation unit 1000 corresponds to an external area 1067 of the picture.

According to an embodiment, when the current transformation unit 1000 is out of the corner outline 1050 or 1060 of the picture, the current transformation unit 1000 may be partitioned in horizontal and vertical directions into four transformation units 1051 to 1054, or 1061 to 1064. In this case, partition information is not required to partition the current transformation unit 1000.

According to an embodiment, one of the transformation units 1051 to 1054 partitioned in horizontal and vertical directions (e.g., the transformation unit 1051) may still extend across the corner outline 1050 of the picture. The transformation unit 1051 extending across the corner outline 1050 of the picture may be recursively partitioned without using partition information based on a predetermined rule until the transformation unit 1051 is not out of the corner outline 1050 of the picture. However, the transformation units 1052 to 1054 outside the corner outline 1050 of the picture correspond to the external area 1057 of the picture, and thus are not transformed (or inversely transformed).

According to an embodiment, at least one of boundaries between the transformation units 1061 to 1064 partitioned in horizontal and vertical directions may match the corner outline 1060 of the picture. In this case, the transformation unit 1061 inside the corner outline 1060 of the picture may be no longer partitioned and be transformed (or inversely transformed), or may be partitioned into a plurality of transformation units by using partition information parsed from a bitstream. However, the transformation units 1062 to 1064 outside the corner outline 1060 of the picture correspond to the external area 1067 of the picture, and thus are not transformed (or inversely transformed).

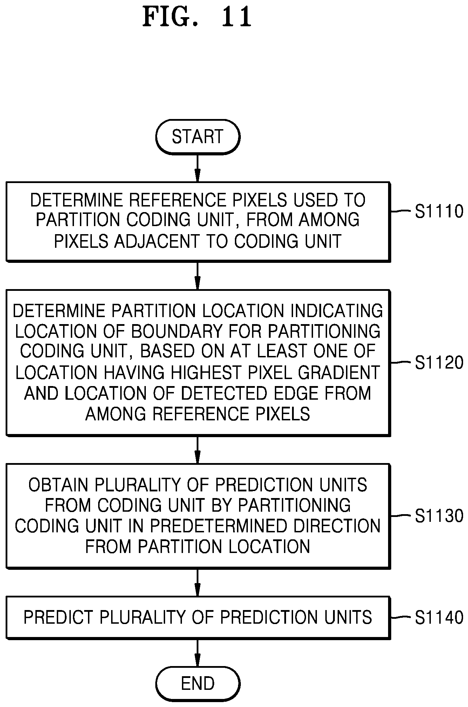

FIG. 11 is a flowchart of an image decoding method according to an embodiment.

In operation S1110, reference pixels used to partition a coding unit are determined from among pixels adjacent to the coding unit.

In operation S1120, a partition location indicating a location of a boundary for partitioning the coding unit is determined based on at least one of a location having the highest pixel gradient and a location of a detected edge from among the reference pixels.

In operation S1130, a plurality of prediction units are obtained from the coding unit by partitioning the coding unit in a predetermined direction from the partition location.

In operation S1140, the plurality of prediction units are predicted.

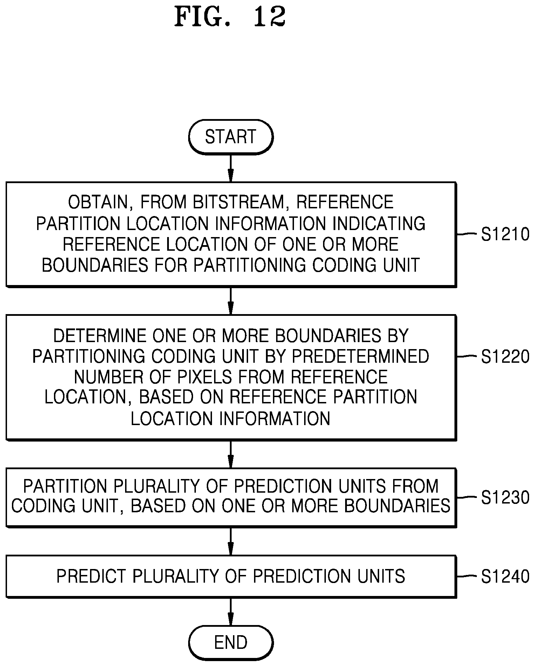

FIG. 12 is a flowchart of an image decoding method according to another embodiment.

In operation S1210, reference partition location information indicating a reference location of one or more boundaries for partitioning a coding unit is obtained from a bitstream.

In operation S1220, the one or more boundaries are determined by partitioning the coding unit by a predetermined number of pixels from the reference location based on the reference partition location information.

In operation S1230, a plurality of prediction units are partitioned from the coding unit based on the one or more boundaries.

In operation S1240, the plurality of prediction units are predicted.

FIG. 13 is a flowchart of an image decoding method according to another embodiment.

In operation S1310, it is determined whether a current transformation unit partitioned from a coding unit is out of an outline of a picture, by comparing a location of the current transformation unit in the picture to at least one of a width and height of the picture.

In operation S1320, the current transformation unit is partitioned in at least one direction into a plurality of transformation units when the current transformation unit is out of the outline of the picture.

In operation S1330, partition information of the current transformation unit is obtained from a bitstream and the current transformation unit is partitioned into a plurality of transformation units based on the partition information when the current transformation unit is not out of the outline of the picture.

In operation S1340, a transformation unit, which is no longer partitioned, from among the plurality of transformation units is inversely transformed.

A method of determining an image data unit according to an embodiment will now be described in detail with reference to FIGS. 14 to 27. A method of partitioning a coding unit, which will be described with reference to FIGS. 14 to 27, may be equally applied to a method of partitioning a transformation unit serving as a basic unit of transformation.

FIG. 14 illustrates processes of determining at least one coding unit as the image decoding apparatus 200 partitions a current coding unit, according to an embodiment.

According to an embodiment, the image decoding apparatus 200 may determine a shape of a coding unit by using block shape information, and determine into which shape a coding unit is partitioned by using partition shape information. That is, a coding unit partitioning method that is indicated by the partition shape information may be determined based on a block shape indicated by the block shape information used by the image decoding apparatus 200.

According to an embodiment, the image decoding apparatus 200 may use block shape information indicating that a current coding unit has a square shape. For example, the image decoding apparatus 200 may determine, according to partition shape information, whether to not partition a square coding unit, to partition the square coding unit vertically, to partition the square coding unit horizontally, or to partition the square coding unit into four coding units. Referring to FIG. 14, when block shape information of a current coding unit 1400 indicates a square shape, the decoder 220 may not partition a coding unit 1410a having the same size as the current coding unit 1400 according to partition shape information indicating non-partition, or determine coding units 1410b, 1410c, or 1410d based on partition shape information indicating a predetermined partitioning method.

Referring to FIG. 14, the image decoding apparatus 200 may determine two coding units 1410b by partitioning the current coding unit 1400 in a vertical direction based on partition shape information indicating partitioning in a vertical direction, according to an embodiment. The image decoding apparatus 200 may determine two coding units 1410c by partitioning the current coding unit 1400 in a horizontal direction based on partition shape information indicating partitioning in a horizontal direction. The image decoding apparatus 200 may determine four coding units 1410d by partitioning the current coding unit 1400 in vertical and horizontal directions based on partition shape information indicating partitioning vertical and horizontal directions. However, a partition shape into which a square coding unit may be partitioned is not limited to the above shapes, and may include any shape indicatable by partition shape information. Predetermined partition shapes into which a square coding unit are partitioned will now be described in detail through various embodiments.

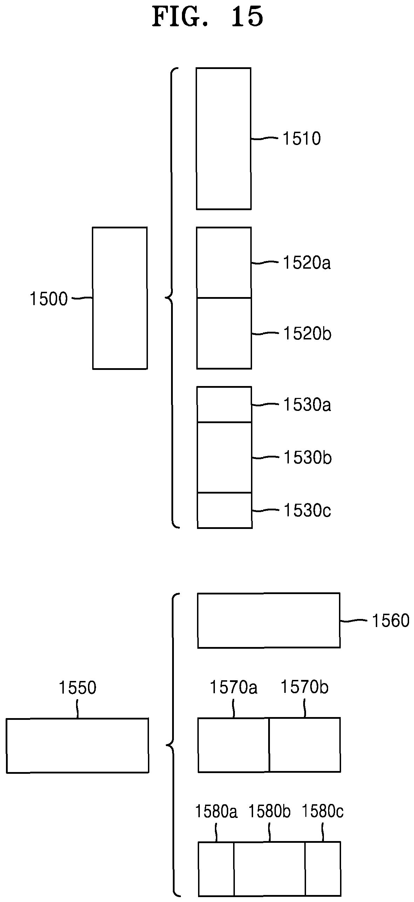

FIG. 15 illustrates processes of determining at least one coding unit as the image decoding apparatus 200 partitions a coding unit having a non-square shape, according to an embodiment.

According to an embodiment, the image decoding apparatus 200 may use block shape information indicating that a current coding unit has a non-square shape. The image decoding apparatus 200 may determine, according to partition shape information, whether to not partition the non-square current coding unit or to partition the non-square current coding unit via a predetermined method. Referring to FIG. 15, when block shape information of a current coding unit 1500 or 1550 indicates a non-square shape, the image decoding apparatus 200 may not partition coding units 1510 or 1560 having the same size as the current coding unit 1500 or 1550 according to partition shape information indicating non-partition, or determine coding units 1520a, 1520b, 1530a, 1530b, 1530c, 1570a, 1570b, 1580a, 1580b, and 1580c based on partition shape information indicating a predetermined partitioning method. A predetermined partitioning method of partitioning a non-square coding unit will now be described in detail through various embodiments.

According to an embodiment, the image decoding apparatus 200 may determine a shape into which a coding unit is partitioned by using partition shape information, and in this case, the partition shape information may indicate the number of at least one coding units generated as the coding unit is partitioned. Referring to FIG. 15, when partition shape information indicates that the current coding unit 1500 or 1550 is partitioned into two coding units, the image decoding apparatus 200 may determine two coding units 1520a and 1520b or 1570a and 1570b included in the current coding unit by partitioning the current coding unit 1500 or 1550 based on the partition shape information.

According to an embodiment, when the image decoding apparatus 200 partitions the current coding unit 1500 or 1550 having a non-square shape based on partition shape information, the image decoding apparatus 200 may partition the current coding unit while considering locations of long sides of the current coding unit 1500 or 1550 having a non-square shape. For example, the image decoding apparatus 200 may determine a plurality of coding units by partitioning the current coding unit 1500 or 1550 in a direction of partitioning the long sides of the current coding unit 1500 or 1550 considering a shape of the current coding unit 1500 or 1550.

According to an embodiment, when partition shape information indicates that a coding unit is partitioned into an odd number of blocks, the image decoding apparatus 200 may determine the odd number of coding units included in the current coding unit 1500 or 1550. For example, when partition shape information indicates that the current coding unit 1500 or 1550 is partitioned into three coding units, the image decoding apparatus 200 may partition the current coding unit 1500 or 1550 into three coding units 1530a, 1530b, and 1530c or 1580a, 1580b, and 1580c. According to an embodiment, the image decoding apparatus 200 may determine the odd number of coding units included in the current coding unit 1500 or 1550, and the sizes of the determined coding units may not be the all same. For example, the size of coding unit 1530b or 1580b from among the determined odd number of coding units 1530a, 1530b, and 1530c or 1580a, 1580b, and 1580c may be different from the sizes of coding units 1530a and 1530c or 1580a and 1580c. That is, coding units that may be determined as the current coding unit 1500 or 1550 is partitioned may have a plurality of types of sizes, and in some cases, the coding units 1530a, 1530b, and 1530c or 1580a, 1580b, and 1580c may have different sizes.

According to an embodiment, when partition shape information indicates that a coding unit is partitioned into an odd number of blocks, the image decoding apparatus 200 may determine the odd number of coding units included in the current coding unit 1500 or 1550, and in addition, may set a predetermined limit on at least one coding unit from among the odd number of coding units generated via partitioning. Referring to FIG. 15, the image decoding apparatus 200 may differentiate decoding processes performed on the coding unit 1530b or 1580b located at the center from among the three coding units 1530a, 1530b, and 1530c or 1580a, 1580b, and 1580c generated as the current coding unit 1500 or 1550 is partitioned from the other coding units 1530a and 1530c or 1580a and 1580c. For example, the image decoding apparatus 200 may limit the coding unit 1530b or 1580b located at the center to be no longer partitioned unlike the other coding units 1530a and 1530c or 1580a and 1580c, or to be partitioned only a predetermined number of times.

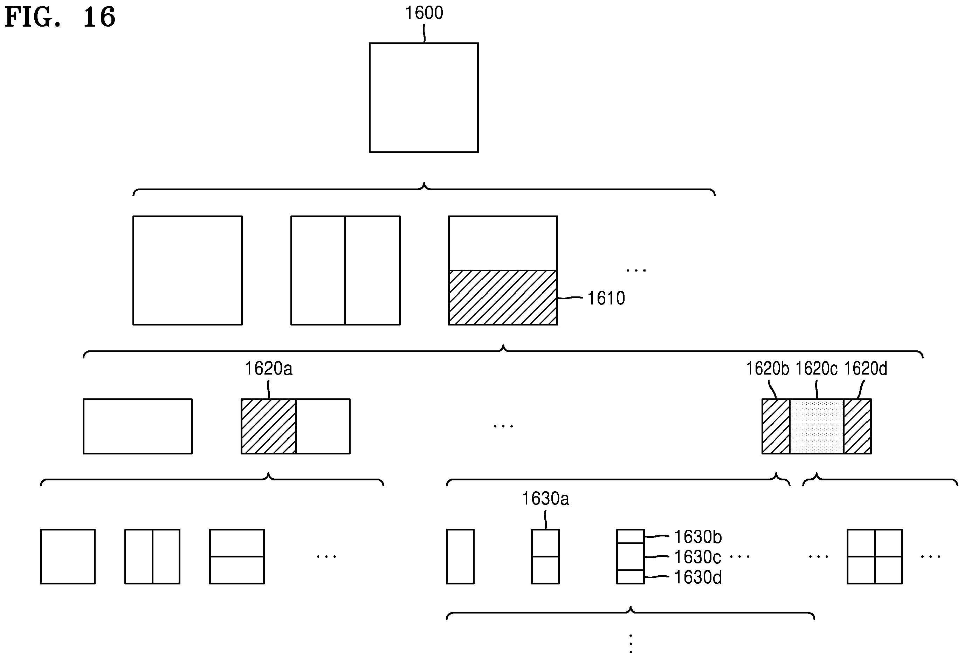

FIG. 16 illustrates processes in which the image decoding apparatus 200 partitions a coding unit, based on at least one of a block shape information and partition shape information, according to an embodiment.

According to an embodiment, the image decoding apparatus 200 may determine a first coding unit 1600 having a square shape to be partitioned or not to be partitioned into coding units, based on at least one of block shape information and partition shape information. According to an embodiment, when the partition shape information indicates that the first coding unit 1600 is partitioned in a horizontal direction, the image decoding apparatus 200 may determine a second coding unit 1610 by partitioning the first coding unit 1600 in the horizontal direction. A first coding unit, a second coding unit, and a third coding unit used according to an embodiment are terms used to indicate a relation between before and after partitioning a coding unit. For example, a second coding unit may be determined by partitioning a first coding unit, and a third coding unit may be determined by partitioning a second coding unit. Hereinafter, it will be understood that relations between first through third coding units are in accordance with the features described above.

According to an embodiment, the image decoding apparatus 200 may determine the determined second coding unit 1610 to be partitioned or not to be partitioned into coding units, based on at least one of block shape information and partition shape information. Referring to FIG. 16, the image decoding apparatus 200 may partition the second coding unit 1610, which has a non-square shape and is determined by partitioning the first coding unit 1600, into at least one third coding unit 1620a, 1620b, 1620c, or 1620d, or may not partition the second coding unit 1610, based on at least one of block shape information and partition shape information. The image decoding apparatus 200 may obtain at least one of the block shape information and the partition shape information, and obtain a plurality of second coding units (for example, the second coding units 1610) having various shapes by partitioning the first coding unit 1600 based on at least one of the obtained block shape information and partition shape information, wherein the second coding unit 1610 may be partitioned according to a method of partitioning the first coding unit 1600 based on at least one of the block shape information and the partition shape information. According to an embodiment, when the first coding unit 1600 is partitioned into the second coding units 1610 based on at least one of block shape information and partition shape information with respect to the first coding unit 1600, the second coding unit 1610 may also be partitioned into third coding units (for example, the third coding units 1620a through 1620d) based on at least one of block shape information and partition shape information with respect to the second coding unit 1610. That is, a coding unit may be recursively partitioned based on at least one of partition shape information and block shape information related to each coding unit. Accordingly, a square coding unit may be determined from a non-square coding unit, and such a square coding unit may be recursively partitioned such that a non-square coding unit is determined. Referring to FIG. 16, a predetermined coding unit (for example, a coding unit located at the center or a square coding unit) from among the odd number of third coding units 1620b, 1620c, and 1620d determined when the second coding unit 1610 having a non-square shape is partitioned may be recursively partitioned. According to an embodiment, the third coding unit 1620c having a square shape from among the third coding units 1620b through 1620d may be partitioned in a horizontal direction into a plurality of fourth coding units. A fourth coding unit 1240 having a non-square shape from among the plurality of fourth coding units may again be partitioned into a plurality of coding units. For example, the fourth coding unit 1240 having a non-square shape may be partitioned into an odd number of coding units 1250a, 1250b, and 1250c.

A method that may be used to recursively partitioned a coding unit will be described below through various embodiments.

According to an embodiment, the image decoding apparatus 200 may determine each of the third coding units 1620a, 1620b, 1620c, and 1620d to be partitioned into coding units or may determine the second coding unit 1610 not to be partitioned, based on at least one of block shape information and partition shape information. The image decoding apparatus 200 may partition the second coding unit 1610 having a non-square shape into the odd number of third coding units 1620b, 1620c, and 1620d, according to an embodiment. The image decoding apparatus 200 may set a predetermined limit on a predetermined third coding unit from among the third coding units 1620b, 1620c, and 1620d. For example, the image decoding apparatus 200 may limit that the third coding unit 1620c located at the center of the third coding units 1620b, 1620c, and 1620d is no longer partitioned, or is partitioned into a settable number of times. Referring to FIG. 16, the image decoding apparatus 200 may limit that the third coding unit 1620c located at the center of the third coding units 1620b, 1620c, and 1620d included in the second coding unit 1610 having a non-square shape is no longer partitioned, is partitioned into a predetermined partition shape (for example, partitioned into four coding units or partitioned into shapes corresponding to those into which the second coding unit 1610 is partitioned), or is partitioned only a predetermined number of times (for example, partitioned only n times wherein n > 0). However, such limits on the third coding unit 1620c located at the center are only examples and should not be interpreted as being limited by those examples, but should be interpreted as including various limits as long as the third coding unit 1620c located at the center are decoded differently from the other third coding units 1620b and 1620d.

According to an embodiment, the image decoding apparatus 200 may obtain at least one of block shape information and partition shape information used to partition a current coding unit from a predetermined location in the current coding unit.

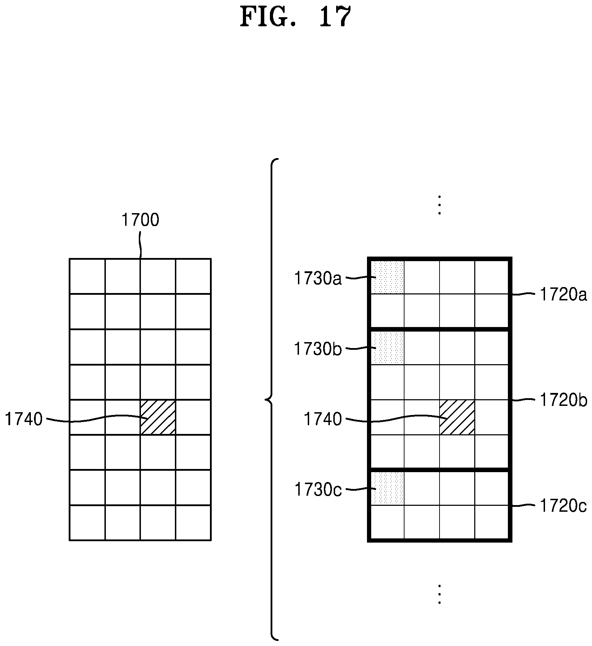

FIG. 17 illustrates a method of determining, by the image decoding apparatus 200, a predetermined coding unit from among an odd number of coding units, according to an embodiment. Referring to FIG. 17, at least one of block shape information and partition shape information of a current coding unit 1700 may be obtained from a sample at a predetermined location (for example, a sample 1740 located at the center) from among a plurality of samples included in the current coding unit 1700. However, the predetermined location in the current coding unit 1700 from which at least one of block shape information and partition shape information is obtained is not limited to the center location shown in FIG. 17, but may be any location (for example, an uppermost location, a lowermost location, a left location, a right location, an upper left location, a lower left location, an upper right location, or a lower right location) included in the current coding unit 1700. The image decoding apparatus 200 may determine that a current coding unit is partitioned into coding units having various shapes and sizes or is not partitioned by obtaining at least one of block shape information and partition shape information from a predetermined location.

According to an embodiment, the image decoding apparatus 200 may select one coding unit when a current coding unit is partitioned into a predetermined number of coding units. A method of selecting one of a plurality of coding units may vary, and details thereof will be described below through various embodiments.

According to an embodiment, the image decoding apparatus 200 may partition a current coding unit into a plurality of coding units, and determine a coding unit at a predetermined location.

FIG. 17 illustrates a method of determining, by the image decoding apparatus 200, a coding unit at a predetermined location from among an odd number of coding units, according to an embodiment.

According to an embodiment, the image decoding apparatus 200 may use information indicating a location of each of the odd number of coding units so as to determine a coding unit located at the center from among the odd number of coding units. Referring to FIG. 17, the image decoding apparatus 200 may determine the odd number of coding units 1720a, 1720b, and 1720c by partitioning the current coding unit 1700. The image decoding apparatus 200 may determine the center coding unit 1720b by using information about the locations of the odd number of coding units 1720a, 1720b, and 1720c. For example, the image decoding apparatus 200 may determine the coding unit 1720b located at the center by determining the locations of the coding units 1720a, 1720b, and 1720c based on information indicating locations of predetermined samples included in the coding units 1720a, 1720b, and 1720c. In detail, the image decoding apparatus 200 may determine the coding unit 1720b located at the center by determining the locations of the coding units 1720a, 1720b, and 1720c based on information indicating locations of upper left samples 1730a, 1730b, and 1730c of the coding units 1720a, 1720b, and 1720c.

According to an embodiment, the information indicating the locations of the upper left samples 1730a, 1730b, and 1730c included in the coding units 1720a, 1720b, and 1720c respectively may include information about a location or coordinates of the coding units 1720a, 1720b, and 1720c in a picture. According to an embodiment, the information indicating the locations of the upper left samples 1730a, 1730b, and 1730c included in the coding units 1720a, 1720b, and 1720c respectively may include information indicating widths or heights of the coding units 1720a, 1720b, and 1720c included in the current coding unit 1700, and such widths or heights may correspond to information indicating differences between coordinates of the coding units 1720a, 1720b, and 1720c in a picture. That is, the image decoding apparatus 200 may determine the coding unit 1720b located at the center by directly using the information about the locations or coordinates of the coding units 1720a, 1720b, and 1720c in a picture or by using information about the widths or heights of the coding units corresponding to the differences between coordinates.

According to an embodiment, the information indicating the location of the upper left sample 1730a of the upper coding unit 1720a may indicate (xa, ya) coordinates, the information indicating the location of the upper left sample 1730b of the center coding unit 1720b may indicate (xb, yb) coordinates, and the information indicating the location of the upper left sample 1730c of the lower coding unit 1720c may indicate (xc, yc) coordinates. The image decoding apparatus 200 may determine the center coding unit 1720b by using the coordinates of the upper left samples 1730a, 1730b, and 1730c respectively included in the coding units 1720a, 1720b, and 1720c. For example, when the coordinates of the upper left samples 1730a, 1730b, and 1730c are arranged in an ascending order or descending order, the coding unit 1720b including the coordinates (xb, yb) of the sample 1730b located at the center may be determined as a coding unit located at the center from among the coding units 1720a, 1720b, and 1720c determined when the current coding unit 1700 is partitioned. However, coordinates indicating the locations of the upper left samples 1730a, 1730b, and 1730c may be coordinates indicating absolute locations in a picture, and in addition, (dxb, dyb) coordinates, i.e., information indicating a relative location of the upper left sample 1730b of the center coding unit 1720b, and (dxc, dyc) coordinates, i.e., information indicating a relative location of the upper left sample 1730c of the lower coding unit 1720c, may be used based on the location of the upper left sample 1730a of the upper coding unit 1720a. Also, a method of determining a coding unit at a predetermined location by using, as information indicating locations of samples included in coding units, coordinates of the samples is not limited to the above, and various arithmetic methods capable of using coordinates of samples may be used.

According to an embodiment, the image decoding apparatus 200 may partition the current coding unit 1700 into the plurality of coding units 1720a, 1720b, and 1720c, and select a coding unit from the coding units 1720a, 1720b, and 1720c according to a predetermined standard. For example, the image decoding apparatus 200 may select the coding unit 1720b having a different size from among the coding units 1720a, 1720b, and 1720c.

According to an embodiment, the image decoding apparatus 200 may determine widths or heights of the coding units 1720a, 1720b, and 1720c by respectively using the (xa, ya) coordinates, i.e., the information indicating the location of the upper left sample 1730a of the upper coding unit 1720a, the (xb, yb) coordinates, i.e., the information indicating the location of the upper left sample 1730b of the center coding unit 1720b, and the (xc, yc) coordinates, i.e., the information indicating the location of the upper left sample 1730c of the lower coding unit 1720c. The image decoding apparatus 200 may determine the sizes of the coding units 1720a, 1720b, and 1720c by respectively using the coordinates (xa, ya), (xb, yb), and (xc, yc) indicating the locations of the coding units 1720a, 1720b, and 1720c.

According to an embodiment, the image decoding apparatus 200 may determine the width of the upper coding unit 1720a to be xb-xa, and the height to be yb-ya. According to an embodiment, the image decoding apparatus 200 may determine the width of the center coding unit 1720b to be xc-xb, and the height to be yc-yb. According to an embodiment, the image decoding apparatus 200 may determine the width or height of the lower coding unit 7 by using the width and height of the current coding unit 7 and the widths and heights of the upper coding unit 1720a and center coding unit 1720b. The image decoding apparatus 200 may determine a coding unit having a different size from other coding units based on the determined widths and heights of the coding units 1720a, 1720b, and 1720c. Referring to FIG. 17, the image decoding apparatus 200 may determine the center coding unit 1720b having a size different from those of the upper coding unit 1720a and lower coding unit 1720c as a coding unit at a predetermined location. However, processes of the image decoding apparatus 200 determining a coding unit having a different size from other coding units are only an example of determining a coding unit at a predetermined location by using sizes of coding units determined based on sample coordinates, and thus various processes of determining a coding unit at a predetermined location by comparing sizes of coding units determined according to predetermined sample coordinates may be used.

However, a location of a sample considered to determine a location of a coding unit is not limited to the upper left as described above, and information about a location of an arbitrary sample included in a coding unit may be used.

According to an embodiment, the image decoding apparatus 200 may select a coding unit at a predetermined location from among an odd number of coding units determined when a current coding unit is partitioned, while considering a shape of the current coding unit. For example, when the current coding unit has a non-square shape in which a width is longer than a height, the image decoding apparatus 200 may determine a coding unit at a predetermined location in a horizontal direction. That is, the image decoding apparatus 200 may determine one of coding units having a different location in the horizontal direction and set a limit on the one coding unit. When the current coding unit has a non-square shape in which a height is longer than a width, the image decoding apparatus 200 may determine a coding unit at a predetermined location in a vertical direction. That is, the image decoding apparatus 200 may determine one of coding units having a different location in the vertical direction and set a limit on the one coding unit.

According to an embodiment, the image decoding apparatus 200 may use information indicating a location of each of an even number of coding units so as to determine a coding unit at a predetermined location from among the even number of coding units. The image decoding apparatus 200 may determine the even number of coding units by partitioning a current coding unit, and determine the coding unit at the predetermined location by using information about the locations of the even number of coding units. Detailed processes thereof may correspond to those of determining a coding unit at a predetermined location (for example, a center location) from among an odd number of coding units described in FIG. 17, and thus details thereof are not provided again.

According to an embodiment, when a current coding unit having a non-square shape is partitioned into a plurality of coding units, predetermined information about a coding unit at a predetermined location during partitioning processes may be used to determine the coding unit at the predetermined location from among the plurality of coding units. For example, the image decoding apparatus 200 may use at least one of block shape information and partition shape information stored in a sample included in a center coding unit during partitioning processes so as to determine a coding unit located at the center from among a plurality of coding units obtained by partitioning a current coding unit.

Referring to FIG. 17, the image decoding apparatus 200 may partition the current coding unit 1700 into the plurality of coding units 1720a, 1720b, and 1720c based on at least one of block shape information and partition shape information, and determine the coding unit 1720b located at the center from among the plurality of coding units 1720a, 1720b, and 1720c. In addition, the image decoding apparatus 200 may determine the coding unit 1720b located at the center considering a location from which at least one of the block shape information and the partition shape information is obtained. That is, at least one of the block shape information and the partition shape information of the current coding unit 1700 may be obtained from the sample 1740 located at the center of the current coding unit 1700, and when the current coding unit 1700 is partitioned into the plurality of coding units 1720a, 1720b, and 1720c based on at least one of the block shape information and the partition shape information, the coding unit 1720b including the sample 1740 may be determined as a coding unit located at the center. However, information used to determine a coding unit located at the center is not limited to at least one of the block shape information and the partition shape information, and various types of information may be used while determining a coding unit located at the center.

According to an embodiment, predetermined information for identifying a coding unit at a predetermined location may be obtained from a predetermined sample included in a coding unit to be determined. Referring to FIG. 17, the image decoding apparatus 200 may use at least one of block shape information and partition shape information obtained from a sample at a predetermined location in the current coding unit 1700 (for example, a sample located at the center of the current coding unit 1700), so as to determine a coding unit at a predetermined location (for example, a coding unit located at the center from among a plurality of coding units) from among the plurality of coding units 1720a, 1720b, and 1720c determined when the current coding unit 1700 is partitioned. That is, the image decoding apparatus 200 may determine the sample at the predetermined location considering a block shape of the current coding unit 1700, and determine and set a predetermined limit on the coding unit 1720b including a sample from which predetermined information (for example, at least one of block shape information and partition shape information) is obtainable, from among the plurality of coding units 1720a, 1720b, and 1720c determined when the current coding unit 1700 is partitioned. Referring to FIG. 17, according to an embodiment, the image decoding apparatus 200 may determine, as a sample from which predetermined information is obtainable, the sample 1740 located at the center of the current coding unit 1700, and set a predetermined limit on the coding unit 1720b including such a sample 1740 during decoding processes. However, a location of a sample from which predetermined information is obtainable is not limited to the above, and may be a sample at an arbitrary location included in the coding unit 1720b determined to set a limit.

According to an embodiment, a location of a sample from which predetermined information is obtainable may be determined according to a shape of the current coding unit 1700. According to an embodiment, block shape information may determine whether a shape of a current coding unit is square or non-square, and determine a location of a sample from which predetermined information is obtainable according to the shape. For example, the image decoding apparatus 200 may determine, as a sample from which predetermined information is obtainable, a sample located on a boundary of partitioning at least one of a width and a height of a current coding unit into halves by using at least one of information about the width of the current coding unit and information about the height of the current coding unit. As another example, when block shape information related to a current coding unit indicates a non-square shape, the image decoding apparatus 200 may determine, as a sample from which predetermined information is obtainable, one of samples adjacent to a boundary of partitioning long sides of the current coding unit into halves.

According to an embodiment, when a current coding unit is partitioned into a plurality of coding units, the image decoding apparatus 200 may use at least one of block shape information and partition shape information so as to determine a coding unit at a predetermined location from among the plurality of coding units. According to an embodiment, the image decoding apparatus 200 may obtain at least one of block shape information and partition shape information from a sample at a predetermined location included in a coding unit, and may partition a plurality of coding units generated as a current coding unit is partitioned by using at least one of the partition shape information and the block shape information obtained from the sample at the predetermined location included in each of the plurality of coding units. That is, a coding unit may be recursively partitioned by using at least one of block shape information and partition shape information obtained from a sample at a predetermined location included in each coding unit. Since processes of recursively partitioning a coding unit have been described above with reference to FIG. 16, details thereof are not provided again.

According to an embodiment, the image decoding apparatus 200 may determine at least one coding unit by partitioning a current coding unit, and determine an order of decoding the at least one coding unit according to a predetermined block (for example, the current coding unit).

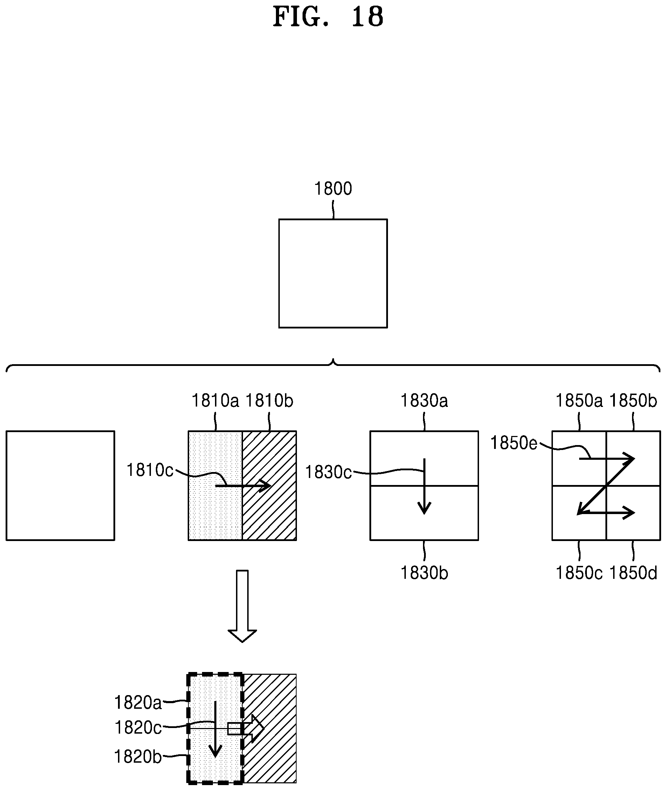

FIG. 18 illustrates an order of processing a plurality of coding units when the plurality of coding units are determined when the image decoding apparatus 200 partitions a current coding unit, according to an embodiment.

According to an embodiment, the image decoding apparatus 200 may determine second coding units 1810a and 1810b by partitioning a first coding unit 1800 in a vertical direction, determine second coding units 1830a and 1830b by partitioning the first coding unit 1800 in a horizontal direction, or determine second coding units 1850a, 1850b, 1850c, and 1850d by partitioning the first coding unit 180 in horizontal and vertical directions, according to block shape information and partition shape information.

Referring to FIG. 18, the image decoding apparatus 200 may determine the second coding units 1810a and 1810b, which are determined by partitioning the first coding unit 1800 in the vertical direction, to be processed in a horizontal direction 1810c. The image decoding apparatus 200 may determine the second coding units 1830a and 1830b, which are determined by partitioning the first coding unit 1800 in the horizontal direction, to be processed in a vertical direction 1830c. The image decoding apparatus 200 may determine the second coding units 1850a, 1850b, 1850c, and 1850d, which are determined by partitioning the first coding unit 1800 in the vertical and horizontal directions, to be processed according to a predetermined order in which coding units located in one row is processed and then coding units located in a next row is processed (for example, a raster scan order or a z-scan order 1850e).

According to an embodiment, the image decoding apparatus 200 may recursively partition coding units. Referring to FIG. 18, the image decoding apparatus 200 may determine the plurality of second coding units 1810a and 1810b, 1830a and 1830b, or 1850a, 1850b, 1850c, and 1850d by partitioning the first coding unit 1800, and recursively partition each of the plurality of second coding units 1810a and 1810b, 1830a and 1830b, or 1850a, 1850b, 1850c, and 1850d. A method of partitioning the plurality of second coding units 1810a and 1810b, 1830a and 1830b, or 1850a, 1850b, 1850c, and 1850d may correspond to a method of partitioning the first coding unit 1800. Accordingly, each of the plurality of second coding units 1810a and 1810b, 1830a and 1830b, or 1850a, 1850b, 1850c, and 1850d may be independently partitioned into a plurality of coding units. Referring to FIG. 18, the image decoding apparatus 200 may determine the second coding units 1810a and 1810b by partitioning the first coding unit 1800 in the vertical direction, and in addition, determine each of the second coding units 1810a and 1810b to be independently partitioned or not partitioned.

According to an embodiment, the image decoding apparatus 200 may partition the second coding unit 1810a at the left in a horizontal direction into third coding units 1820a and 1820b, and may not partition the second coding unit 1810b at the right.

According to an embodiment, an order of processing coding units may be determined based on partition processes of coding units. In other words, an order of processing coding units that are partitioned may be determined based on an order of processing coding units before being partitioned. The image decoding apparatus 200 may determine an order of processing the third coding units 1820a and 1820b determined when the second coding unit 1810a at the left is partitioned independently from the second coding unit 1810b at the right. Since the third coding units 1820a and 1820b are determined when the second coding unit 1810a at the left is partitioned in a horizontal direction, the third coding units 1820a and 1820b may be processed in a vertical direction 1820c. Also, since an order of processing the second coding unit 1810a at the left and the second coding unit 1810b at the right corresponds to the horizontal direction 1810c, the second coding unit 1810b at the right may be processed after the third coding units 1820a and 1820b included in the second coding unit 1810a at the left are processed in the vertical direction 1820c. The above descriptions are related processes of determining an order of processing coding units according to coding units before being partitioned, but such processes are not limited to the above embodiments, and any method of independently processing, in a predetermined order, coding units partitioned into various shapes may be used.

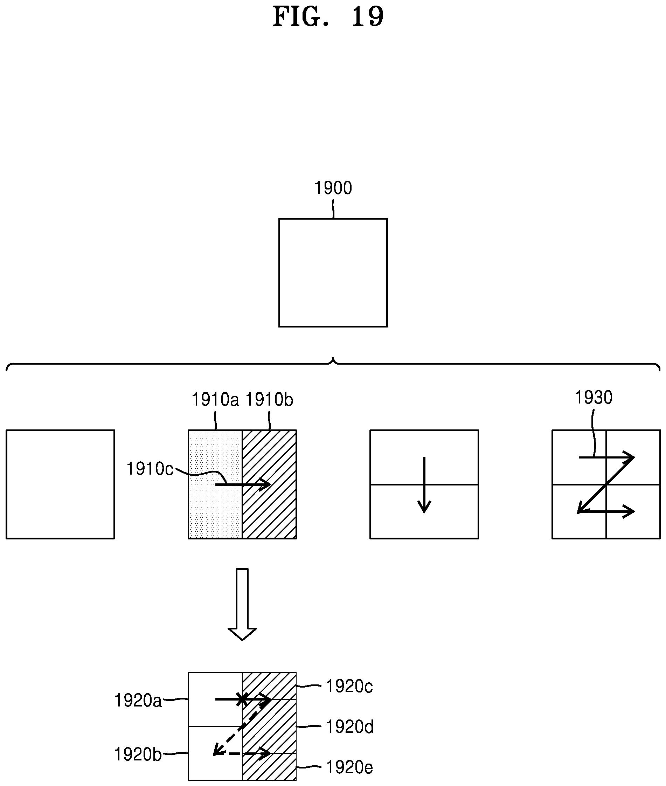

FIG. 19 illustrates processes of determining that a current coding unit is partitioned into an odd number of coding units when coding units are not processable in a predetermined order by the image decoding apparatus 200, according to an embodiment.

According to an embodiment, the image decoding apparatus 200 may determine that a current coding unit is partitioned into an odd number of coding units based on obtained block shape information and partition shape information. Referring to FIG. 19, a first coding unit 1900 having a square shape may be partitioned into second coding units 1910a and 1910b having a non-square shape, and the second coding units 1910a and 1910b may be independently respectively partitioned into third coding units 1920a and 1920b, and 1920c, 1920d, and 1920e. According to an embodiment, the image decoding apparatus 200 may partition the second coding unit 1910a at the left from among the second coding units 1910a and 1910b into a horizontal direction to determine the plurality of third coding units 1920a and 1920b, and partition the second coding unit 1910b at the right into the odd number of third coding units 1920c, 1920d, and 1920e.

According to an embodiment, the image decoding apparatus 200 may determine whether a coding unit partitioned into an odd number exists by determining whether the third coding units 1920a, 1920b, 1920c, 1920d, and 1920e are processable in a predetermined order. Referring to FIG. 19, the image decoding apparatus 200 may determine the third coding units 1920a, 1920b, 1920c, 1920d, and 1920e by recursively partitioning the first coding unit 1900. The image decoding apparatus 200 may determine whether any of the first coding unit 1900, the second coding units 1910a and 1910b, and the third coding units 1920a and 1920b, and 1920c, 1920d, and 1920e is partitioned into an odd number of coding units, based on at least one of the block shape information and the partition shape information. For example, the second coding unit 1910b at the right from among the second coding units 1910a and 1910b may be partitioned into the odd number of third coding units 1920c, 1920d, and 1920e. An order of processing a plurality of coding units included in the first coding unit 1900 may be a predetermined order (for example, a z-scan order 1930), and the image decoding apparatus 200 may determine whether the third coding units 1920c, 1920d, and 1920e determined when the second coding unit 1910b at the right is partitioned into an odd number satisfy a condition of being processable according to the predetermined order.

According to an embodiment, the image decoding apparatus 200 may determine whether the third coding units 1920a, 1920b, 1920c, 1920d, and 1920e included in the first coding unit 1900 satisfy a condition of being processable according to a predetermined order, wherein the condition is related to whether at least one of a width and a height of each of the second coding units 1910a and 1910b is partitioned into halves according to boundaries of the third coding units 1920a, 1920b, 1920c, 1920d, and 1920e. For example, the third coding units 1920a and 1920b determined when the height of the second coding unit 1910a at the left and having a non-square shape is partitioned into halves satisfy the condition, but it may be determined that the third coding units 1920c, 1920d, and 1920e do not satisfy the condition because the boundaries of the third coding units 1920c, 1920d, and 1920e that are determined when the second coding unit 1910b at the right is partitioned into three coding units do not partition the width or height of the second coding unit 1910b at the right into halves. The image decoding apparatus 200 may determine disconnection of a scan order when the condition is not satisfied, and determine that the second coding unit 1910b at the right is partitioned into the odd number of coding units, based on a result of the determination. According to an embodiment, when an odd number of coding units are partitioned, the image decoding apparatus 200 may impose a predetermined restriction on a coding unit at a predetermined location from among the partitioned coding units. Detailed descriptions of the predetermined restriction and the predetermined location have been provided above, and thus will not be repeated herein.

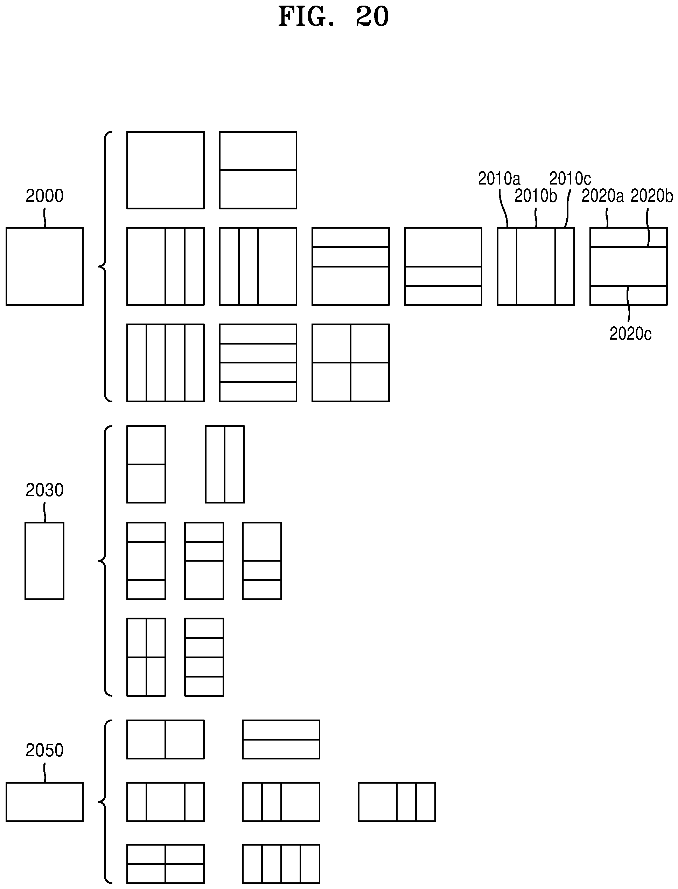

FIG. 20 illustrates an operation, performed by the image decoding apparatus 200, of determining one or more coding units by partitioning a first coding unit 2000, according to an embodiment. According to an embodiment, the image decoding apparatus 200 may partition the first coding unit 2000 based on at least one of block shape information and partition type information obtained by the receiver 210. The first coding unit 2000 having a square shape may be partitioned into four square coding units or into a plurality of non-square coding units. For example, referring to FIG. 20, when the block shape information indicates that the first coding unit 2000 has a square shape and the partition type information indicates to partition the first coding unit 2000 into non-square coding units, the image decoding apparatus 200 may partition the first coding unit 2000 into a plurality of non-square coding units. Specifically, when the partition type information indicates to partition the first coding unit 2000 in a horizontal or vertical direction into an odd number of coding units, the image decoding apparatus 200 may partition the square first coding unit 2000 in a vertical direction into an odd number of second coding units 2010a to 2010c, or partition the square first coding unit 2000 in a horizontal direction into an odd number of second coding unit 2020a to 2020c.

According to an embodiment, the image decoding apparatus 200 may determine whether the second coding units 2010a to 2010c, or 2020a to 2020c included in the first coding unit 2000 satisfy a condition for a predetermined processing order, and the condition relates to whether at least one of a width and height of the first coding unit 2000 is divided in half along boundaries of the second coding units 2010a to 2010c, or 2020a to 2020c. Referring to FIG. 20, since the boundaries of the second coding units 2010a to 2010c determined by partitioning the square first coding unit 2000 in a vertical direction do not divide the width of the first coding unit 2000 in half, it may be determined that the first coding unit 2000 does not satisfy the condition for the predetermined processing order. Since the boundaries of the second coding units 2020a to 2020c determined by partitioning the square first coding unit 2000 in a horizontal direction do not divide the height of the first coding unit 2000 in half, it may be determined that the first coding unit 2000 does not satisfy the condition for the predetermined processing order. When the condition is not satisfied as described above, the image decoding apparatus 200 may decide disconnection of a scan order, and determine that the first coding unit 2000 is partitioned into an odd number of coding units, based on the result of decision. According to an embodiment, when an odd number of coding units are partitioned, the image decoding apparatus 200 may impose a predetermined restriction on a coding unit at a predetermined location from among the partitioned coding units. Detailed descriptions of the predetermined restriction and the predetermined location have been provided above, and thus will not be repeated herein.

According to an embodiment, the image decoding apparatus 200 may determine various-shaped coding units by partitioning the first coding unit 2000.

Referring to FIG. 20, the image decoding apparatus 200 may partition the square first coding unit 2000 or a non-square first coding unit 2030 or 2050 into various-shaped coding units.

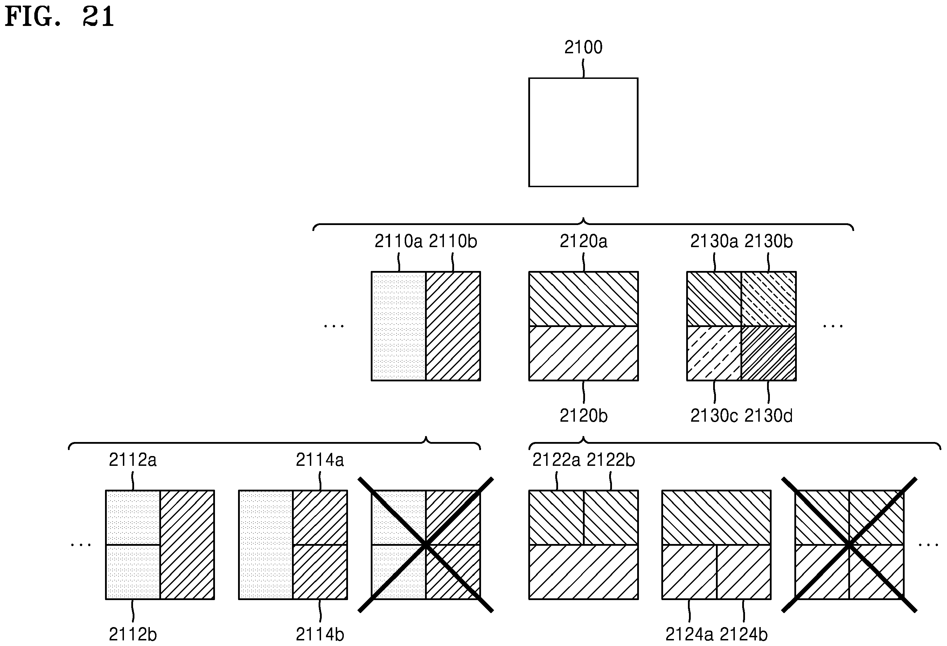

FIG. 21 illustrates that a shape into which a second coding unit is partitionable by the image decoding apparatus 200 is restricted when the second coding unit having a non-square shape determined when a first coding unit 2100 is partitioned satisfies a predetermined condition, according to an embodiment.

According to an embodiment, the image decoding apparatus 200 may determine that the first coding unit 2100 having a square shape is partitioned into second coding units 2110a and 2110b or 2120a and 2120b having a non-square shape, based on at least one of block shape information and partition shape information obtained through the receiver 210. The second coding units 2110a and 2110b or 2120a and 2120b may be independently partitioned. Accordingly, the image decoding apparatus 200 may determine that the second coding units 2110a and 2110b or 2120a and 2120b are partitioned into a plurality of coding units or are not partitioned based on at least one of block shape information and partition shape information related to each of the coding units 2110a and 2110b or 2120a and 2120b. According to an embodiment, the image decoding apparatus 200 may determine third coding units 2112a and 2112b by partitioning, in a horizontal direction, the second coding unit 2110a at the left having a non-square shape, which is determined when the first coding unit 2100 is partitioned in a vertical direction. However, when the second coding unit 2110a at the left is partitioned in the horizontal direction, the image decoding apparatus 200 may set a limit that the second coding unit 2110b at the right is not partitioned in the horizontal direction like the second coding unit 2110a at the left. When third coding units 2114a and 2114b are determined when the second coding unit 2110b at the right is partitioned in the same direction, the third coding units 2112a, 2112b, 2114a, and 2114b are determined when the second coding units 2110a at the left and the second coding unit 2110b at the right are each independently partitioned in the horizontal direction. However, this is the same result as partitioning the first coding unit 2100 into four second coding units 2130a, 2130b, 2130c, and 2130d having a square shape based on at least one of block shape information and partition shape information, and thus may be inefficient in terms of image decoding.

According to an embodiment, the image decoding apparatus 200 may determine third coding units 2122a and 2122b or 2124a, and 2124b by partitioning, in a vertical direction, the second coding unit 2120a or 2120b having a non-square shape determined when the first coding unit 2100 is partitioned in the horizontal direction. However, when one of second coding units (for example, the second coding unit 2120a at the top) is partitioned in a vertical direction, the image decoding apparatus 200 may set a limit that the other second coding unit (for example, the second coding unit 2120b at the bottom) is not partitioned in the vertical direction like the second coding unit 2120a at the top for the above described reasons.

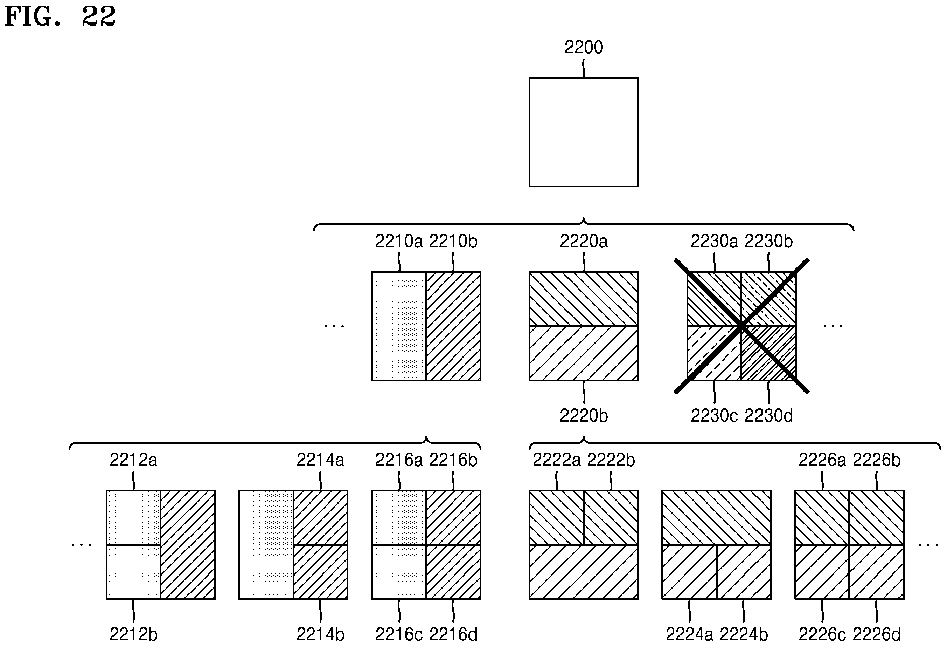

FIG. 22 illustrates processes of the image decoding apparatus 200 partitioning a coding unit having a square shape when partition shape information is unable to indicate that a coding unit is partitioned into four square shapes, according to an embodiment.

According to an embodiment, the image decoding apparatus 200 may determine second coding units 2210a and 2210b, or 2220a and 2220b, by partitioning a first coding unit 2200 based on at least one of block shape information and partition shape information. Partition shape information may include information about various shapes into which a coding unit may be partitioned, but such information about various shapes may not include information for partitioning a coding unit into four square coding units. According to such partition shape information, the image decoding apparatus 200 is unable to partition the first coding unit 2200 having a square shape into four second coding units 2230a, 2230b, 2230c, and 2230d having a square shape. The image decoding apparatus 200 may determine the second coding units 2210a and 2210b, or 2220a and 2220b having a non-square shape based on the partition shape information.

According to an embodiment, the image decoding apparatus 200 may independently partition each of the second coding units 2210a and 2210b, or 2220a and 2220b having a non-square shape. Each of the second coding units 2210a and 2210b, or 2220a and 2220b may be partitioned in a predetermined order via a recursive method that may be a partitioning method corresponding to a method of partitioning the first coding unit 2200 based on at least one of the block shape information and the partition shape information.

For example, the image decoding apparatus 200 may determine third coding units 2212a and 2212b having a square shape by partitioning the second coding unit 2210a at the left in a horizontal direction, or determine third coding units 2214a and 2214b having a square shape by partitioning the second coding unit 2210b at the right in a horizontal direction. In addition, the image decoding apparatus 200 may determine third coding units 2216a through 2216d having a square shape by partitioning both the second coding unit 2210a at the left and the second coding unit 2210b at the right in the horizontal direction. In this case, coding units may be determined in the same manner as when the first coding unit 2200 is partitioned into four second coding units 2230a through 2230d having a square shape.

As another example, the image decoding apparatus 200 may determine third coding units 2222a and 2222b having a square shape by partitioning the second coding unit 2220a at the top in a vertical direction, and determine third coding units 2224a and 2224b having a square shape by partitioning the second coding unit 2220b at the bottom in a vertical direction. In addition, the image decoding apparatus 200 may determine third coding units 2226a, 2226b, 2226c, and 2226d having a square shape by partitioning both the second coding unit 2220a at the top and the second coding unit 2220b at the bottom in the vertical direction. In this case, coding units may be determined in the same manner as when the first coding unit 2200 is partitioned into four second coding units 2230a, 2230b, 2230c, and 2230d having a square shape.

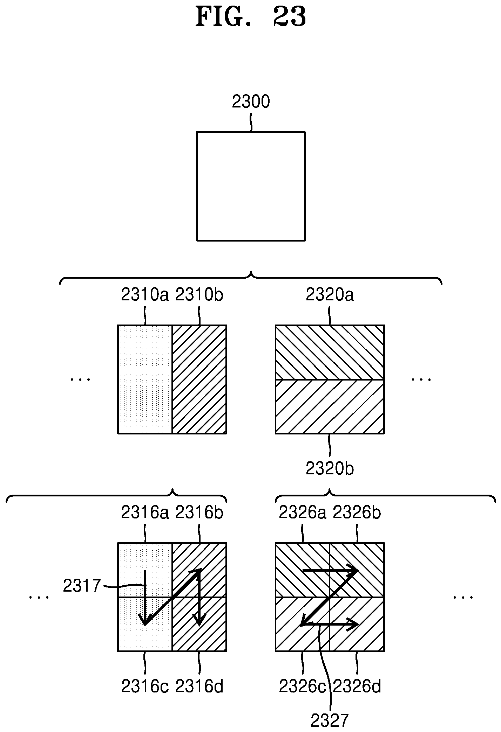

FIG. 23 illustrates that an order of processing a plurality of coding units may be changed according to processes of partitioning a coding unit, according to an embodiment.

According to an embodiment, the image decoding apparatus 200 may partition a first coding unit 2300 based on block shape information and partition shape information. When the block shape information indicates a square shape and the partition shape information indicates that the first coding unit 2300 is partitioned in at least one of a horizontal direction and a vertical direction, the image decoding apparatus 200 may partition the first coding unit 2300 to determine second coding units 2310a and 2310b, 2320a and 2320b, or 1930a, 1930b, 1930c, and 1930d. Referring to FIG. 23, the second coding units 2310a and 2310b, or 2320a and 2320b having a non-square shape and determined when the first coding unit 2300 is partitioned in the horizontal direction or the vertical direction may each be independently partitioned based on block shape information and partition shape information. For example, the image decoding apparatus 200 may determine third coding units 2316a, 2316b, 2316c, and 2316d by partitioning, in the horizontal direction, each of the second coding units 2310a and 2310b generated as the first coding unit 2300 is partitioned in the vertical direction, or determine third coding units 2326a, 2326b, 2326c, and 2326d by partitioning, in the vertical direction, the second coding units 2320a and 2320b generated as the first coding unit 2300 is partitioned in the vertical direction. Processes of partitioning the second coding units 2310a and 2310b, or 2320a and 2320b have been described above with reference to FIG. 21, and thus details thereof are not provided again.

According to an embodiment, the image decoding apparatus 200 may process coding units according to a predetermined order. Features about processing coding units according to a predetermined order have been described above with reference to FIG. 18, and thus details thereof are not provided again. Referring to FIG. 23, the image decoding apparatus 200 may determine four third coding units 2316a, 2316b, 2316c, and 2316d or 2326a, 2326b, 2326c, and 2326d having a square shape by partitioning the first coding unit 2300 having a square shape. According to an embodiment, the image decoding apparatus 200 may determine an order of processing the third coding units 2316a, 2316b, 2316c, and 2316d or 2326a, 2326b, 2326c, and 2326d based on how the first coding unit 2300 is partitioned.

According to an embodiment, the image decoding apparatus 200 may determine the third coding units 2316a, 2316b, 2316c, and 2316d by partitioning, in the horizontal direction, the second coding units 2310a and 2310b generated as the first coding unit 2300 is partitioned in the vertical direction, and process the third coding units 2316a, 2316b, 2316c, and 2316d according to an order 2317 of first processing, in the vertical direction, the third coding units 2316a and 2316c included in the second coding unit 2310a at the left, and then processing, in the vertical direction, the third coding units 2316b and 2316d included in the second coding unit 2310b at the right.

According to an embodiment, the image decoding apparatus 200 may determine the third coding units 2326a, 2326b, 2326c, and 2326d by partitioning, in the vertical direction, the second coding units 2320a and 2320b generated as the first coding unit 2300 is partitioned in the horizontal direction, and process the third coding units 2326a, 2326b, 2326c, and 2326d according to an order 2327 of first processing, in the horizontal direction, the third coding units 2326a and 2326b included in the second coding unit 2320a at the top, and then processing, in the horizontal direction, the third coding units 2326c and 2326d included in the second coding unit 2320b at the bottom.

Referring to FIG. 23, the third coding units 2316a, 2316b, 2316c, and 2316d or 2326a, 2326b, 2326c, and 2326d having a square shape may be determined when the second coding units 2310a and 2310b, or 2320a and 2320b are each partitioned. The second coding units 2310a and 2310b determined when the first coding unit 2300 is partitioned in the vertical direction and the second coding units 2320a and 2320b determined when the first coding unit 2300 is partitioned in the horizontal direction are partitioned in different shapes, but according to the third coding units 2316a, 2316b, 2316c, and 2316d and 2326a, 2326b, 2326c, and 2326d determined afterwards, the first coding unit 2300 is partitioned in coding units having same shapes. Accordingly, the image decoding apparatus 200 may process pluralities of coding units determined in same shapes in different orders even when the coding units having the same shapes are consequently determined when coding units are recursively partitioned through different processes based on at least one of block shape information and partition shape information.

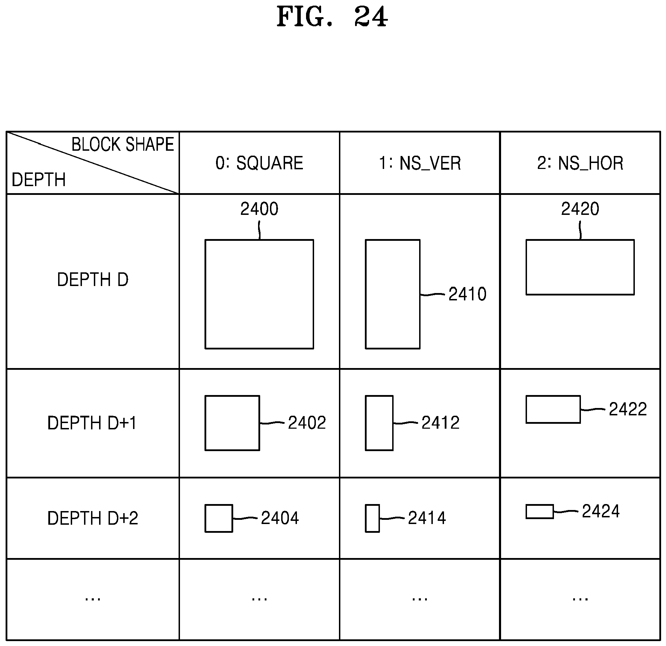

FIG. 24 illustrates processes of determining a depth of a coding unit as a shape and size of the coding unit are changed, when a plurality of coding units are determined as the coding unit is recursively partitioned, according to an embodiment.

According to an embodiment, the image decoding apparatus 240 may determine a depth of a coding unit according to a predetermined standard. For example, the predetermined standard may be a length of a long side of the coding unit. When a length of a long side of a current coding unit is partitioned by 2n times shorter than a length of a long side of a coding unit before partition, it may be determined that a depth of the current coding unit is increased by n times than a depth of the coding unit before partition, wherein n>0. Hereinafter, a coding unit having an increased depth is referred to as a coding unit of a lower depth.

Referring to FIG. 24, the image decoding apparatus 200 may determine a second coding unit 2402 and a third coding unit 2404 of lower depths by partitioning a first coding unit 2400 having a square shape, based on block shape information indicating a square shape (for example, block shape information may indicate '0:SQUARE'), according to an embodiment. When a size of the first coding unit 2400 having a square shape is 2Nx2N, the second coding unit 2402 determined by partitioning a width and a height of the first coding unit 2400 by $1/2^1$ may have a size of NxN. In addition, the third coding unit 2404 determined by partitioning a width and a height of the second coding unit 2402 by 1/2 may have a size of N/2xN/2. In this case, a width and a height of the third coding unit 2404 corresponds to $1/2^2$ of the first coding unit 2400. When a depth of the first coding unit 2400 is D, a depth of the second coding unit 2402 having $1/2^1$ of the width and the height of the first coding unit 2400 may be D+1, and a depth of the third coding unit 2404 having $1/2^2$ of the width and the height of the first coding unit 2400 may be D+2.

According to an embodiment, the image decoding apparatus 200 may determine a second coding unit 2412 or 2422 and a third coding unit 2414 or 2424 by partitioning a first coding unit 2410 or 2420 having a non-square shape, based on block shape information indicating a non-square shape (for example, block shape information may indicate '1:NS_VER' indicating a non-square shape in which a height is longer than a width, or '2:NS_HOR' indicating a non-square shape in which a width is longer than a height), according to an embodiment.

The image decoding apparatus 200 may determine a second coding unit (for example, the second coding unit 2402, 2412, or 2422) by partitioning at least one of a width and a height of the first coding unit 2410 having a size of Nx2N. That is, the image decoding apparatus 200 may determine the second coding unit 2402 having a size of NxN or the second coding unit 2422 having a size of NxN/2 by partitioning the first coding unit 2410 in a horizontal direction, or determine the second coding unit 2412 having a size of N/2xN by partitioning the first coding unit 2410 in horizontal and vertical directions.

According to an embodiment, the image decoding apparatus 200 may determine a second coding unit (for example, the second coding unit 2402, 2412, or 2422) by partitioning at least one of a width and a height of the first coding unit 2420 having a size of 2NxN. That is, the image decoding apparatus 200 may determine the second coding unit 2402 having a size of NxN or the second coding unit 2412 having a size of N/2xN by partitioning the first coding unit 200 in a vertical direction, or determine the second coding unit 2422 having a size of NxN/2 by partitioning the first coding unit 2410 in horizontal and vertical directions.

According to an embodiment, the image decoding apparatus 200 may determine a third coding unit (for example, the third coding unit 2404, 2414, or 2424) by partitioning at least one of a width and a height of the second coding unit 2402 having a size of NxN. That is, the image decoding apparatus 200 may determine the third coding unit 2404 having a size of N/2xN/2, the third coding unit 2414 having a size of $N/2^2$xN/2, or the third coding unit 2424 having a size of $N/2xN/2^2$ by partitioning the second coding unit 2402 in vertical and horizontal directions.

According to an embodiment, the image decoding apparatus 200 may determine a third coding unit (for example, the third coding unit 2404, 2414, or 2424) by partitioning at least one of a width and a height of the second coding unit 2412 having a size of N/2xN. That is, the image decoding apparatus 200 may determine the third coding unit 2404 having a size of N/2xN/2 or the third coding unit 2424 having a size of $N/2xN/2^2$ by partitioning the second coding unit 2412 in a horizontal direction, or the third coding unit 2414 having a size of $N/2^2$xN/2 by partitioning the second coding unit 2412 in vertical and horizontal directions.

According to an embodiment, the image decoding apparatus 200 may determine a third coding unit (for example, the third coding unit 2404, 2414, or 2424) by partitioning at least one of a width and a height of the second coding unit 2422 having a size of NxN/2. That is, the image decoding apparatus 200 may determine the third coding unit 2404 having a size of N/2xN/2 or the third coding unit 2414 having a size of $N/2^2$xN/2 by partitioning the second coding unit 2412 in a vertical direction, or the third coding unit 2424 having a size of $N/2xN/2^2$ by partitioning the second coding unit 2422 in vertical and horizontal directions.

According to an embodiment, the image decoding apparatus 200 may partition a coding unit (for example, the first, second, or third coding unit 2400, 2402, or 2404) having a square shape in a horizontal or vertical direction. For example, the first coding unit 2410 having a size of Nx2N may be determined by partitioning the first coding unit 2400 having a size of 2Nx2N in the vertical direction, or the first coding unit 2420 having a size of 2NxN may be determined by partitioning the first coding unit 2400 in the horizontal direction. According to an embodiment, when a depth is determined based on a length of a longest side of a coding unit, a depth of a coding unit determined as the first coding unit 2400 having a size of 2Nx2N is partitioned in a horizontal or vertical direction may be the same as a depth of the first coding unit 2400.

According to an embodiment, the width and the height of the third coding unit 2414 or 2424 may be $1/2^2$ of those of the first coding unit 2410 or 2420. When the depth of the first coding unit 2410 or 2420 is D, the depth of the second coding unit 2412 or 2422 that is 1/2 of the width and the height of the first coding unit 2410 or 2420 may be D+1, and the depth of the third coding unit 2414 or 2424 that is $1/2^2$ of the width and the height of the first coding unit 2410 or 2420 may be D+2.

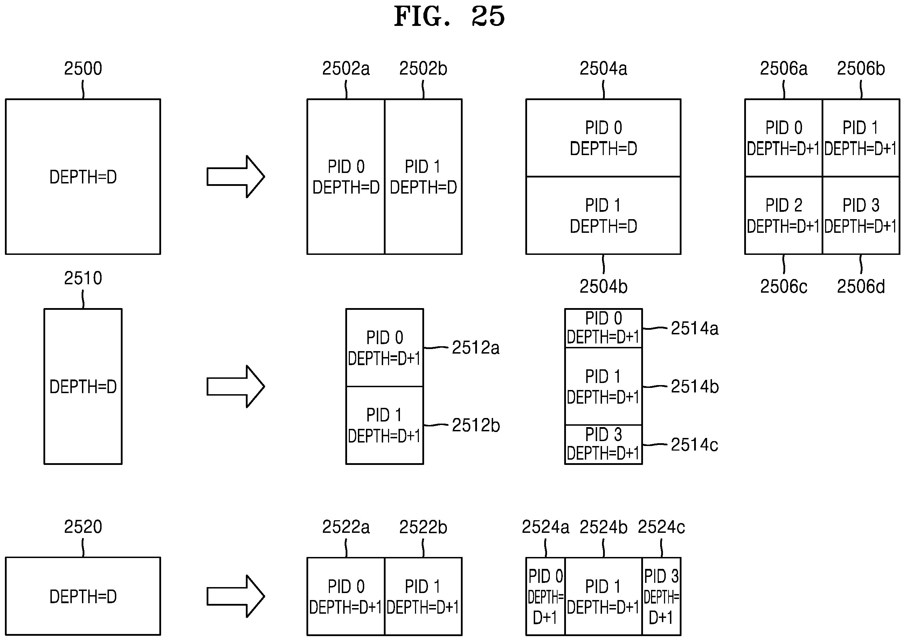

FIG. 25 illustrates a part index (PID) for distinguishing depths and coding units, which may be determined according to shapes and sizes of coding units, according to an embodiment.

According to an embodiment, the image decoding apparatus 200 may determine a second coding unit having various shapes by partitioning a first coding unit 2500 having a square shape. Referring to FIG. 25, the image decoding apparatus 200 may determine second coding units 2502a and 2502b, 2504a and 2504b, or 2506a, 2506b, 2506c, and 2506d by partitioning the first coding unit 2500 in at least one of a vertical direction and a horizontal direction, according to partition shape information. That is, the image decoding apparatus 200 may determine the second coding units 2502a and 2502b, 2504a and 2504b, or 2506a, 2506b, 2506c, and 2506d, based on partition shape information of the first coding unit 2500.

According to an embodiment, a depth of the second coding units 2502a and 2502b, 2504a and 2504b, or 2506a, 2506b, 2506c, and 2506d determined according to the partition shape information of the first coding unit 2500 having a square shape may be determined based on a length of a long side. For example, because a length of one side of the first coding unit 2500 having a square shape is the same as a length of a long side of the second coding units 2502a and 2502b or 2504a and 2504b having a non-square shape, the depths of the first coding unit 2500 and the second coding units 2502a and 2502b or 2504a and 2504b having a non-square shape may be the same, i.e., D. On the other hand, when the image decoding apparatus 200 partitions the first coding unit 2500 into the four second coding units 2506a, 2506b, 2506c, and 2506d having a square shape, based on the partition shape information, a length of one side of the second coding units 2506a, 2506b, 2506c, and 2506d having a square shape is 1/2 of the length of one side of the first coding unit 2500, the depths of the second coding units 2506a, 2506b, 2506c, and 2506d may be D+1, i.e., a depth lower than the depth D of the first coding unit 2500.

According to an embodiment, the image decoding apparatus 200 may partition a first coding unit 2510, in which a height is longer than a width, in a horizontal direction into a plurality of second coding units 2512a and 2512b or 2514a, 2514b, and 2514c, according to partition shape information. According to an embodiment, the image decoding apparatus 200 may partition a first coding unit 2520, in which a width is longer than a height, in a vertical direction into a plurality of second coding units 2522a and 2522b or 2514a, 2514b, and 2514c, according to partition shape information.

According to an embodiment, depths of the second coding units 2512a, 2512b, 2514a, 2514b, 2516a, 2516b, 2516c, and 2516d determined according to the partition shape information of the first coding unit 2510 or 2520 having a non-square shape may be determined based on a length of a long side. For example, because a length of one side of the second coding units 2512a and 2512b having a square shape is 1/2 of a length of one side of the first coding unit 2510 having a non-square shape, in which the height is longer than the width, the depths of the second coding units 2502a, 2502b, 2504a, and 2504b are D+1, i.e., depths lower than the depth D of the first coding unit 2510 having a non-square shape.

In addition, the image decoding apparatus 200 may partition the first coding unit 2510 having a non-square shape into an odd number of second coding units or 2514a, 2514b, and 2514c, based on partition shape information. The odd number of second coding units or 2514a, 2514b, and 2514c may include the second coding units 2514a and 2514c having a non-square shape, and the second coding unit 2514b having a square shape. In this case, because a length of a long side of the second coding units 2514a and 2514c having a non-square shape and a length of one side of the second coding unit 2514b having a square shape are 1/2 of a length of one side of the first coding unit 2510, depths of the second coding units or 2514a, 2514b, and 2514c may be D+1, i.e., a depth lower than the depth D of the first coding unit 2510. The image decoding apparatus 200 may determine depths of coding units related to the first coding unit 2520 having a non-square shape in which a width is longer than a height, in the same manner as determining depths of coding units related to the first coding unit 2510.

According to an embodiment, with respect to determining PIDs for distinguishing coding units, when an odd number of coding units do not have the same size, the image decoding apparatus 200 may determine PIDs based on a size ratio of the coding units. Referring to FIG. 25, the second coding unit 2514b located at the center from the odd number of second coding units 2514a, 2514b, and 2514c may have the same width as the second coding units 2514a and 2514c, but have a height twice higher than those of the second coding units 2514a and 2514c. That is, the second coding unit 2514b located at the center may include two of the second coding units 2514a and 2514c. Accordingly, when the PID of the second coding unit 2514b located at the center is 1 according to a scan order, the PID of the second coding unit 2514c in a next order may be 3, the PID being increased by 2. That is, values of the PID may be discontinuous. According to an embodiment, the image decoding apparatus 200 may determine whether an odd number of coding units has the same sizes based on discontinuity of PID for distinguishing the coding units.

According to an embodiment, the image decoding apparatus 200 may determine whether a plurality of coding units determined as a current coding unit is partitioned have predetermined partition shapes based on values of PID. Referring to FIG. 25, the image decoding apparatus 200 may determine the even number of second coding units 2512a and 251b or the odd number of second coding units 2514a, 2514b, and 2514c by partitioning the first coding unit 2510 having a rectangular shape in which the height is longer than the width. The image decoding apparatus 200 may use the PID indicating each coding unit so as to distinguish a plurality of coding units. According to an embodiment, a PID may be obtained from a sample at a predetermined location (for example, an upper left sample) of each coding unit.

According to an embodiment, the image decoding apparatus 200 may determine a coding unit at a predetermined location from among coding units determined by using PIDs for distinguishing coding units. According to an embodiment, when partition shape information of the first coding unit 2510 having a rectangular shape in which a height is longer than a width indicates that the first coding unit 2510 is partitioned into three coding units, the image decoding apparatus 200 may partition the first coding unit 2510 into the three second coding units 2514a, 2514b, and 2514c. The image decoding apparatus 200 may assign a PID to each of the three second coding units 2514a, 2514b, and 2514c. The image decoding apparatus 200 may compare PIDs of an odd number of coding units so as to determine a center coding unit from among the coding units. The image decoding apparatus 200 may determine, as a coding unit at a center location from among coding units determined as the first coding unit 2510 is partitioned, the second coding unit 2514b having a PID corresponding to a center value from among PIDs, based on PIDs of the coding units. According to an embodiment, while determining PIDs for distinguishing coding units, when the coding units do not have the same sizes, the image decoding apparatus 200 may determine PIDs based on a size ratio of the coding units. Referring to FIG. 25, the second coding unit 2514b generated as the first coding unit 2510 is partitioned may have the same width as the second coding units 2514a and 2514c, but may have the height twice higher than those of the second coding units 2514a and 2514c. In this case, when the PID of the second coding unit 2514b located at the center is 1, the PID of the second coding unit 2514c in a next order may be 3, the PID increased by 2. As such, when an increasing range of PIDs differs while uniformly increasing, the image decoding apparatus 200 may determine that a current coding unit is partitioned into a plurality of coding units including a coding unit having a different size from other coding units. According to an embodiment, when partition shape information indicates partition into an odd number of coding units, the image decoding apparatus 200 may partition a current coding unit into a plurality of coding units, in which a coding unit at a predetermined location (for example, a center coding unit) have a size different from other coding units. In this case, the image decoding apparatus 200 may determine the center coding unit having the different size by using PIDs of the coding units. However, a PID, and a size or location of a coding unit at a predetermined location described above are specified to describe an embodiment, and thus should not be limitedly interpreted, and various PIDs, and various locations and sizes of a coding unit may be used.

According to an embodiment, the image decoding apparatus 200 may use a predetermined data unit from which recursive partition of a coding unit is started.

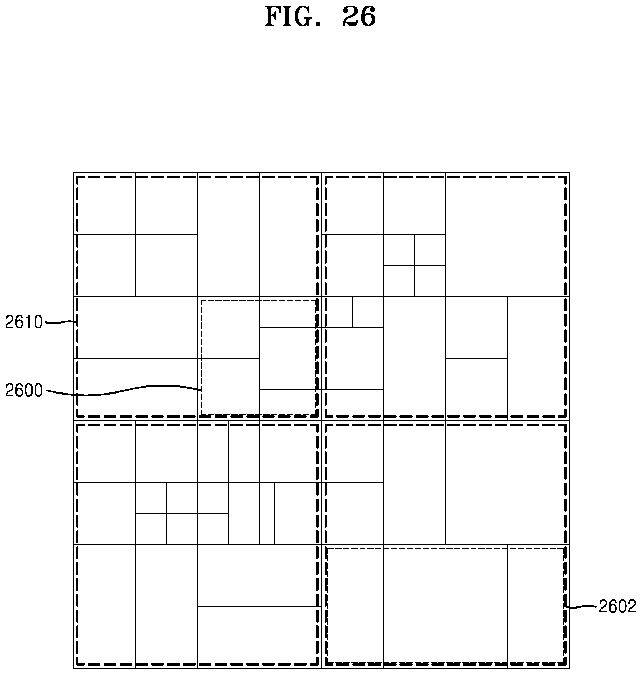

FIG. 26 illustrates that a plurality of coding units are determined according to a plurality of predetermined data units included in a picture, according to an embodiment.

According to an embodiment, a predetermined data unit may be defined as a data unit from which a coding unit starts to be recursively partitioned by using at least one of block shape information and partition shape information. That is, the predetermined data unit may correspond to a coding unit of an uppermost depth used while determining a plurality of coding units by partitioning a current picture. Hereinafter, the predetermined data unit is referred to as a reference data unit for convenience of description.

According to an embodiment, the reference data unit may indicate a predetermined size and shape. According to an embodiment, a reference coding unit may include MxN samples. Here, M and N may be the same, and may be an integer expressed as a multiple of 2. That is, the reference data unit may indicate a square shape or a non-square shape, and may later be partitioned into an integer number of coding units.

According to an embodiment, the image decoding apparatus 200 may partition a current picture into a plurality of reference data units. According to an embodiment, the image decoding apparatus 200 may partition the plurality of reference data units obtained by partitioning the current picture by using partitioning information about each of the reference data units. Partitioning processes of such reference data units may correspond to partitioning processes using a quad-tree structure.

According to an embodiment, the image decoding apparatus 200 may pre-determine a smallest size available for the reference data unit included in the current picture. Accordingly, the image decoding apparatus 200 may determine the reference data unit having various sizes that are equal to or larger than the smallest size, and determine at least one coding unit based on the determined reference data unit by using block shape information and partition shape information.

Referring to FIG. 26, the image decoding apparatus 200 may use a reference coding unit 2600 having a square shape, or may use a reference coding unit 2602 having a non-square shape. According to an embodiment, a shape and size of a reference coding unit may be determined according to various data units (for example, a sequence, a picture, a slice, a slice segment, and a largest coding unit) that may include at least one reference coding unit.

According to an embodiment, the receiver 210 of the image decoding apparatus 200 may obtain, from a bitstream, at least one of information about a shape of a reference coding unit and information about a size of the reference coding unit, according to the various data units. Processes of determining at least one coding unit included in the reference coding unit 2600 having a square shape have been described above through processes of partitioning the current coding unit of FIG. 14, and processes of determining at least one coding unit included in the reference coding unit 2600 having a non-square shape have been described above through processes of partitioning the current coding unit 1500 or 1550 of FIG. 15, and thus details thereof are not provided again.

According to an embodiment, in order to determine a size and shape of a reference coding unit according to some data units pre-determined based on a predetermined condition, the image decoding apparatus 200 may use a PID for distinguishing the size and shape of the reference coding unit. That is, the receiver 210 may obtain, from a bitstream, only a PID for distinguishing a size and shape of a reference coding unit as a data unit satisfying a predetermined condition (for example, a data unit having a size equal to or smaller than a slice) from among various data units (for example, a sequence, a picture, a slice, a slice segment, and a largest coding unit), according to slices, slice segments, and largest coding units. The image decoding apparatus 200 may determine the size and shape of the reference data unit according to data units that satisfy the predetermined condition, by using the PID. When information about a shape of a reference coding unit and information about a size of a reference coding unit are obtained from a bitstream and used according to data units having relatively small sizes, usage efficiency of the bitstream may not be sufficient, and thus instead of directly obtaining the information about the shape of the reference coding unit and the information about the size of the reference coding unit, only a PID may be obtained and used. In this case, at least one of the size and the shape of the reference coding unit corresponding to the PID indicating the size and shape of the reference coding unit may be pre-determined. That is, the image decoding apparatus 200 may select at least one of the pre-determined size and shape of the reference coding unit according to the PID so as to determine at least one of the size and shape of the reference coding unit included in a data unit that is a criterion for obtaining the PID.

According to an embodiment, the image decoding apparatus 200 may use at least one reference coding unit included in one largest coding unit. That is, a largest coding unit partitioning an image may include at least one reference coding unit, and a coding unit may be determined when each of the reference coding unit is recursively partitioned. According to an embodiment, at least one of a width and height of the largest coding unit may be an integer times at least one of a width and height of the reference coding unit. According to an embodiment, a size of a reference coding unit may be equal to a size of a largest coding unit, which is partitioned n times according to a quad-tree structure. In other words, the image decoding apparatus 200 may determine a reference coding unit by partitioning a largest coding unit n times according to a quad-tree structure, and partition the reference coding unit based on at least one of block shape information and partition shape information according to various embodiments.

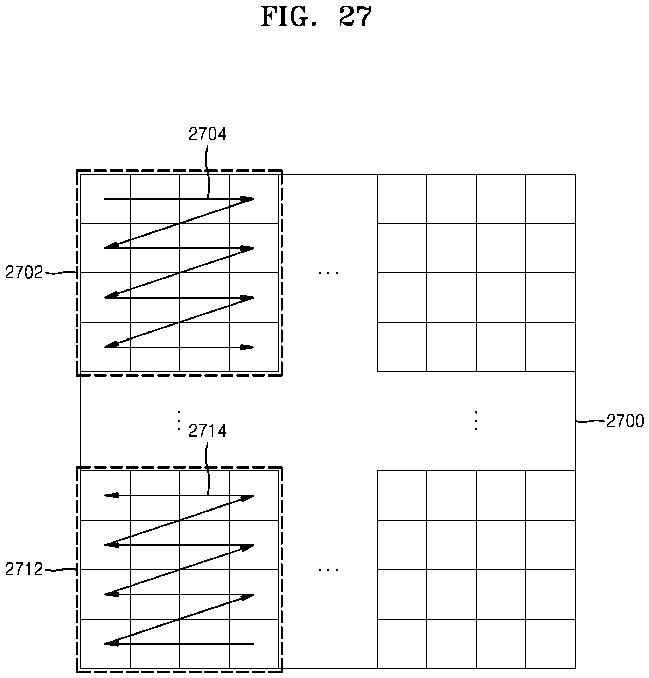

FIG. 27 illustrates a processing block serving as a criterion of determining a determination order of reference coding units included in a picture 2700, according to an embodiment.

According to an embodiment, the image decoding apparatus 200 may determine at least one processing block partitioning a picture. A processing block is a data unit including at least one reference coding unit partitioning an image, and the at least one reference coding unit included in the processing block may be determined in a predetermined order. In other word, a determining order of the at least one reference coding unit determined in each processing block may correspond to one of various orders for determining a reference coding unit, and may vary according to processing blocks. A determining order of reference coding units determined per processing block may be one of various orders, such as a raster scan order, a Z-scan order, an N-scan order, an up-right diagonal scan order, a horizontal scan order, and a vertical scan order, but should not be limitedly interpreted by the scan orders.

According to an embodiment, the image decoding apparatus 200 may determine a size of at least one processing block included in an image by obtaining information about a size of a processing block. The image decoding apparatus 200 may obtain, from a bitstream, the information about a size of a processing block to determine the size of the at least one processing block included in the image. The size of the processing block may be a predetermined size of a data unit indicated by the information about a size of a processing block.

According to an embodiment, the receiver 210 of the image decoding apparatus 200 may obtain, from the bitstream, the information about a size of a processing block according to predetermined data units. For example, the information about a size of a processing block may be obtained from the bitstream in data units of images, sequences, pictures, slices, and slice segments. That is, the receiver 210 may obtain, from the bitstream, the information about a size of a processing block according to such several data units, and the image decoding apparatus 200 may determine the size of at least one processing block partitioning the picture by using the obtained information about a size of a processing block, wherein the size of the processing block may be an integer times a size of a reference coding unit.

According to an embodiment, the image decoding apparatus 200 may determine sizes of processing blocks 2702 and 2712 included in the picture 2700. For example, the image decoding apparatus 200 may determine a size of a processing block based on information about a size of a processing block, the information obtained from a bitstream. Referring to FIG. 27, the image decoding apparatus 200 may determine horizontal sizes of the processing blocks 2702 and 2712 to be four times a horizontal size of a reference coding unit, and a vertical size thereof to be four times a vertical size of the reference coding unit, according to an embodiment. The image decoding apparatus 200 may determine a determining order of at least one reference coding unit in at least one processing block.

According to an embodiment, the image decoding apparatus 200 may determine each of the processing blocks 2702 and 2712 included in the picture 2700 based on a size of a processing block, and determine a determining order of at least one reference coding unit included in each of the processing blocks 2702 and 2712. According to an embodiment, determining of a reference coding unit may include determining of a size of the reference coding unit.

According to an embodiment, the image decoding apparatus 200 may obtain, from a bitstream, information about a determining order of at least one reference coding unit included in at least one processing block, and determine the determining order of the at least one reference coding unit based on the obtained information. The information about a determining order may be defined as an order or direction of determining reference coding units in a processing block. That is, an order of determining reference coding units may be independently determined per processing block.

According to an embodiment, the image decoding apparatus 200 may obtain, from a bitstream, information about a determining order of a reference coding unit according to predetermined data units. For example, the receiver 210 may obtain, from the bitstream, the information about a determining order of a reference coding unit according to data units, such as images, sequences, pictures, slices, slice segments, and processing blocks. Since the information about a determining order of a reference coding unit indicates a determining order of a reference coding unit in a processing block, the information about a determining order may be obtained per predetermined data unit including an integer number of processing blocks.

According to an embodiment, the image decoding apparatus 200 may determine at least one reference coding unit based on the determined order.

According to an embodiment, the receiver 210 may obtain, from the bitstream, information about a determining order of a reference coding unit, as information related to the processing blocks 2702 and 2712, and the image decoding apparatus 200 may determine an order of determining at least one reference coding unit included in the processing blocks 2702 and 2712 and determine at least one reference coding unit included in the picture 2700 according to a determining order of a coding unit. Referring to FIG. 27, the image decoding apparatus 200 may determine determining orders 2704 and 2714 of at least one reference coding unit respectively related to the processing blocks 2702 and 2712. For example, when information about a determining order of a reference coding unit is obtained per processing block, determining orders of a reference coding unit related to the processing blocks 2702 and 2712 may be different from each other. When the determining order 2704 related to the processing block 2702 is a raster scan order, reference coding units included in the processing block 2702 may be determined according to the raster scan order. On the other hand, when the determining order 2714 related to the processing block 2712 is an inverse order of a raster scan order, reference coding units included in the processing block 2712 may be determined in the inverse order of the raster scan order.

The image decoding apparatus 200 may decode determined at least one reference coding unit, according to an embodiment. The image decoding apparatus 200 may decode an image based on reference coding units determined through above embodiments. Examples of a method of decoding a reference coding unit may include various methods of decoding an image.

According to an embodiment, the image decoding apparatus 200 may obtain, from a bitstream, and use block shape information indicating a shape of a current coding unit or partition shape information indicating a method of partitioning the current coding unit. The block shape information or the partition shape information may be included in a bitstream related to various data units. For example, the image decoding apparatus 200 may use the block shape information or partition shape information, which is included in a sequence parameter set, a picture parameter set, a video parameter set, a slice header, and a slice segment header. In addition, the image decoding apparatus 200 may obtain, from a bitstream, and use syntax corresponding to the block shape information or the partition shape information, according to largest coding units, reference coding units, and processing blocks.

While this disclosure has been particularly shown and described with reference to embodiments thereof, it will be understood by those of ordinary skill in the art that various changes in form and details may be made therein without departing from the spirit and scope of the disclosure as defined by the appended claims. The embodiments should be considered in a descriptive sense only and not for purposes of limitation. Therefore, the scope of the disclosure is defined not by the detailed description of the disclosure but by the appended claims, and all differences within the scope will be construed as being included in the present disclosure.

The embodiments of the present disclosure can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

## Claims

1. An image decoding method comprising:

   determining reference pixels for partitioning a coding unit, from among pixels adjacent to the coding unit;
   determining a partition location indicating a location of a boundary for partitioning the coding unit, based on at least one of a location having a highest pixel gradient and a location of a detected edge from among the reference pixels;
   obtaining a plurality of prediction units from the coding unit by partitioning the coding unit in a predetermined direction from the partition location; and
performing a prediction of the plurality of prediction units.

2. The image decoding method of claim 1, wherein the predetermined direction is a direction for vertically or horizontally partitioning the coding unit.

3. The image decoding method of claim 1, wherein the determining of the reference pixels comprises determining pixels having a higher variance value as the reference pixels by comparing a variance value of pixels adjacent to a top side of the coding unit to a variance value of pixels adjacent to a left side of the coding unit.

4. The image decoding method of claim 1, wherein the performing the prediction comprises setting predicted values of pixels corresponding to the boundary as average predicted values of the prediction units partitioned by the boundary, when the location of the boundary for partitioning the coding unit indicates integer pixels.

5. The image decoding method of claim 1, wherein the performing the prediction comprises setting predicted values of pixels adjacent to the boundary, based on predicted values of the prediction units partitioned by the boundary, when the location of the boundary for partitioning the coding unit indicates a boundary between integer pixels.

6. The image decoding method of claim 1, wherein the determining of the partition location comprises selecting one of two partition location candidates from among the reference pixels.

7. The image decoding method of claim 1, wherein, when a prediction mode of the coding unit is an inter mode, the partition location is derived by information indicating a location of a boundary of another coding unit, and a motion vector.

8. The image decoding method of claim 1, wherein information about the predetermined direction is obtained from a bitstream.

9. An image decoding method comprising:

obtaining, from a bitstream, partition reference location information indicating a reference location of one or more boundaries for partitioning a coding unit;
determining the one or more boundaries by partitioning the coding unit by a predetermined number of pixels from the reference location, based on the partition reference location information;
partitioning a plurality of prediction units from the coding unit, based on the one or more boundaries; and
performing a prediction of the plurality of prediction units.

10. The image decoding method of claim 9, wherein the partition location reference information indicates a location of a boundary, which is closest to a top left pixel of the coding unit, from among the one or more boundaries.

11. The image decoding method of claim 9, wherein the predetermined number of pixels is based on a size of the coding unit.

12. The image decoding method of claim 9, wherein the partitioning of the plurality of prediction units comprises:

selecting one of the one or more boundaries; and
partitioning two prediction units from the coding unit, based on the selected boundary.

13. An image decoding method comprising:

determining whether a current transformation unit partitioned from a coding unit is out of an outline of a picture, by comparing a location of the current transformation unit in the picture to at least one of a width and height of the picture;
partitioning the current transformation unit in at least one direction into a plurality of transformation units when the current transformation unit is out of the outline of the picture;
obtaining, from a bitstream, partition information of the current transformation unit and partitioning the current transformation unit into a plurality of transformation units, based on the partition information when the current transformation unit is not out of the outline of the picture; and

inversely transforming a transformation unit, which is no longer partitioned, from among the plurality of transformation units.

14. The image decoding method of claim 13, wherein the current transformation unit is recursively partitioned in at least one direction into a plurality of transformation units until at least one transformation unit of the plurality of transformation units is not out of the outline of the picture.

15. The image decoding method of claim 13, wherein the partition information of the current transformation unit is not obtained from the bitstream when the current transformation unit is out of the outline of the picture.

# FIG. 1

```
                                                      100

         ┌───────────┐        ┌──────────────┐
    ───▶ │  ENCODER  │ ─────▶ │ TRANSMITTER  │ ───▶
         └───────────┘        └──────────────┘
              110                   120
```

# FIG. 2

```
                                                      200

         ┌───────────┐        ┌──────────────┐
    ───▶ │  RECEIVER │ ─────▶ │   DECODER    │ ───▶
         └───────────┘        └──────────────┘
              210                   220
```

# FIG. 3

310    320    330    340

350    360    370    380

# FIG. 4

# FIG. 5

EP 3 396 955 A1

# FIG. 6

# FIG. 7

N=2

712  716
714  718

— 710

N=3

732  734  736

— 730

N=4

752  754

— 750

# FIG. 8

# FIG. 9

# FIG. 10A

# FIG. 10B

# FIG. 10C

1056 1057 / 1000

1050

PICTURE
OUTLINE

| 1051 | 1052 |
| 1053 | 1054 |

1066 1067 / 1000

1060

PICTURE
OUTLINE

| 1061 | 1062 |
| 1063 | 1064 |

# FIG. 11

START

DETERMINE REFERENCE PIXELS USED TO
PARTITION CODING UNIT, FROM AMONG
PIXELS ADJACENT TO CODING UNIT — S1110

DETERMINE PARTITION LOCATION INDICATING
LOCATION OF BOUNDARY FOR PARTITIONING
CODING UNIT, BASED ON AT LEAST ONE OF
LOCATION HAVING HIGHEST PIXEL GRADIENT — S1120
AND LOCATION OF DETECTED EDGE FROM
AMONG REFERENCE PIXELS

OBTAIN PLURALITY OF PREDICTION UNITS
FROM CODING UNIT BY PARTITIONING
CODING UNIT IN PREDETERMINED DIRECTION — S1130
FROM PARTITION LOCATION

PREDICT PLURALITY OF PREDICTION UNITS — S1140

END

# FIG. 12

```
                        ┌─────────┐
                        │  START  │
                        └────┬────┘
                             │
                             ▼
┌──────────────────────────────────────────────────────┐
│         OBTAIN, FROM BITSTREAM, REFERENCE              │
│    PARTITION LOCATION INFORMATION INDICATING           │──── S1210
│      REFERENCE LOCATION OF ONE OR MORE                 │
│    BOUNDARIES FOR PARTITIONING CODING UNIT             │
└──────────────────────────┬───────────────────────────┘
                             │
                             ▼
┌──────────────────────────────────────────────────────┐
│       DETERMINE ONE OR MORE BOUNDARIES BY             │
│   PARTITIONING CODING UNIT BY PREDETERMINED            │──── S1220
│        NUMBER OF PIXELS FROM REFERENCE                 │
│     LOCATION, BASED ON REFERENCE PARTITION             │
│             LOCATION INFORMATION                       │
└──────────────────────────┬───────────────────────────┘
                             │
                             ▼
┌──────────────────────────────────────────────────────┐
│  PARTITION PLURALITY OF PREDICTION UNITS FROM         │──── S1230
│ CODING UNIT, BASED ON ONE OR MORE BOUNDARIES          │
└──────────────────────────┬───────────────────────────┘
                             │
                             ▼
┌──────────────────────────────────────────────────────┐
│      PREDICT PLURALITY OF PREDICTION UNITS            │──── S1240
└──────────────────────────┬───────────────────────────┘
                             │
                             ▼
                        ┌─────────┐
                        │   END   │
                        └─────────┘
```

# FIG. 13

START

DETERMINE WHETHER CURRENT TRANSFORMATION UNIT PARTITIONED FROM CODING UNIT IS OUT OF OUTLINE OF PICTURE, BY COMPARING LOCATION OF CURRENT TRANSFORMATION UNIT IN PICTURE TO AT LEAST ONE OF WIDTH AND HEIGHT OF PICTURE ——S1310

PARTITION CURRENT TRANSFORMATION UNIT IN AT LEAST ONE DIRECTION INTO PLURALITY OF TRANSFORMATION UNITS WHEN CURRENT TRANSFORMATION UNIT IS OUT OF OUTLINE OF PICTURE ——S1320

OBTAIN, FROM BITSTREAM, PARTITION INFORMATION OF CURRENT TRANSFORMATION UNIT AND PARTITION CURRENT TRANSFORMATION UNIT INTO PLURALITY OF TRANSFORMATION UNITS, BASED ON PARTITION INFORMATION WHEN CURRENT TRANSFORMATION UNIT IS NOT OUT OF OUTLINE OF PICTURE ——S1330

INVERSELY TRANSFORM TRANSFORMATION UNIT, WHICH IS NO LONGER PARTITIONED, FROM AMONG PLURALITY OF TRANSFORMATION UNITS ——S1340

END

# FIG. 14

1400

1410a

1410b  1410b

1410c

1410c

1410d  1410d

1410d  1410d

# FIG. 15

1510

1500

1520a

1520b

1530a

1530b

1530c

1560

1550

1570a    1570b

1580a  1580b  1580c

FIG. 16

EP 3 396 955 A1

# FIG. 17

# FIG. 18

# FIG. 19

1900

1910a 1910b

1930

1910c

1920a
1920b

1920c
1920d
1920e

# FIG. 20

2000

2010a
2010b
2010c
2020a 2020b
2020c

2030

2050

# FIG. 21

FIG. 22

2200

2210a 2210b     2220a     2230a 2230b

2220b     2230c 2230d

2212a     2214a     2216a 2216b     2222a 2222b     2226a 2226b

2212b     2214b     2216c 2216d     2224a 2224b     2226c 2226d

# FIG. 23

2300

2310a 2310b

2320a

2320b

2316a 2316b

2317

2316c 2316d

2326a 2326b

2326c 2326d

2327

# FIG. 24

| BLOCK SHAPE / DEPTH | 0: SQUARE | 1: NS_VER | 2: NS_HOR |
|---|---|---|---|
| DEPTH D | 2400 | 2410 | 2420 |
| DEPTH D+1 | 2402 | 2412 | 2422 |
| DEPTH D+2 | 2404 | 2414 | 2424 |
| ... | ... | ... | ... |

# FIG. 25

EP 3 396 955 A1

# FIG. 26

# FIG. 27

## INTERNATIONAL SEARCH REPORT

| International application No. |
|---|
| **PCT/KR2017/001523** |

| A. | CLASSIFICATION OF SUBJECT MATTER |
|---|---|

*H04N 19/119(2014.01)i, H04N 19/176(2014.01)i, H04N 19/105(2014.01)i, H04N 19/182(2014.01)i*

According to International Patent Classification (IPC) or to both national classification and IPC

| B. | FIELDS SEARCHED |
|---|---|

Minimum documentation searched (classification system followed by classification symbols)

H04N 19/119; H04N 19/122; H04N 19/51; H04N 19/597; H04N 19/172; H04N 19/103; H04N 19/00; H04N 7/36; H04N 19/176; H04N 19/105; H04N 19/182

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: partition, edge, boundary, unit, decoding, picture

| C. | DOCUMENTS CONSIDERED TO BE RELEVANT | |
|---|---|---|
| Category* | Citation of document, with indication, where appropriate, of the relevant passages | Relevant to claim No. |
| X | KR 10-2015-0003133 A (HUMAX HOLDINGS CO., LTD.) 08 January 2015<br>See paragraphs [0054]-[0088], [0110]-[0119]; and figures 3-8, 11-12. | 1-12 |
| Y | | 13-15 |
| Y | KR 10-2014-0139459 A (SAMSUNG ELECTRONICS CO., LTD.) 05 December 2014<br>See paragraphs [0092]-[0107]; and figures 9-12b. | 13-15 |
| A | JP 2015-027022 A (KDDI CORP.) 05 February 2015<br>See paragraphs [0032]-[0044]; and figures 1-3. | 1-15 |
| A | KR 10-2014-0077989 A (FRAUNHOFER-GESELLSCHAFT ZUR FORDERUNG DER ANGEWANDTEN FORSCHUNG E.V.) 24 June 2014<br>See paragraphs [0044]-[0086]; and figures 4-6. | 1-15 |
| A | US 2013-0315312 A1 (AMANO, Hiroshi et al.) 28 November 2013<br>See paragraphs [0150]-[0172]; and figures 2-7. | 1-15 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 MAY 2017 (10.05.2017) | **15 MAY 2017 (15.05.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

**INTERNATIONAL SEARCH REPORT**
Information on patent family members

| International application No. |
| --- |
| **PCT/KR2017/001523** |

| Patent document cited in search report | Publication date | Patent family member | Publication date |
| --- | --- | --- | --- |
| KR 10-2015-0003133 A | 08/01/2015 | CN 102648631 A | 22/08/2012 |
| | | CN 102648631 B | 30/03/2016 |
| | | CN 103039073 A | 10/04/2013 |
| | | CN 103039073 B | 14/09/2016 |
| | | CN 103039077 A | 10/04/2013 |
| | | CN 104702951 A | 10/06/2015 |
| | | CN 104768005 A | 08/07/2015 |
| | | CN 104768007 A | 08/07/2015 |
| | | CN 104811717 A | 29/07/2015 |
| | | CN 104853201 A | 19/08/2015 |
| | | CN 105812812 A | 27/07/2016 |
| | | CN 105898311 A | 24/08/2016 |
| | | EP 2509319 A2 | 10/10/2012 |
| | | EP 2579598 A2 | 10/04/2013 |
| | | EP 2590411 A2 | 08/05/2013 |
| | | EP 2942957 A1 | 11/11/2015 |
| | | EP 2942959 A1 | 11/11/2015 |
| | | EP 2942960 A1 | 11/11/2015 |
| | | KR 10-1292093 B1 | 08/08/2013 |
| | | KR 10-1376673 B1 | 02/04/2014 |
| | | KR 10-1387467 B1 | 22/04/2014 |
| | | KR 10-1472030 B1 | 16/12/2014 |
| | | KR 10-1472031 B1 | 16/12/2014 |
| | | KR 10-1630146 B1 | 14/06/2016 |
| | | KR 10-1630147 B1 | 14/06/2016 |
| | | KR 10-1630148 B1 | 14/06/2016 |
| | | KR 10-1633294 B1 | 24/06/2016 |
| | | KR 10-1667282 B1 | 20/10/2016 |
| | | KR 10-1701176 B1 | 01/02/2017 |
| | | KR 10-2011-0061468 A | 09/06/2011 |
| | | KR 10-2011-0067648 A | 22/06/2011 |
| | | KR 10-2014-0102625 A | 22/08/2014 |
| | | KR 10-2014-0102626 A | 22/08/2014 |
| | | KR 10-2014-0102627 A | 22/08/2014 |
| | | KR 10-2014-0102628 A | 22/08/2014 |
| | | KR 10-2014-0102629 A | 22/08/2014 |
| | | KR 10-2014-0102630 A | 22/08/2014 |
| | | KR 10-2014-0102631 A | 22/08/2014 |
| | | KR 10-2014-0102632 A | 22/08/2014 |
| | | KR 10-2015-0003131 A | 08/01/2015 |
| | | KR 10-2015-0003132 A | 08/01/2015 |
| | | KR 10-2015-0003134 A | 08/01/2015 |
| | | KR 10-2015-0003135 A | 08/01/2015 |
| | | KR 10-2015-0008355 A | 22/01/2015 |
| | | KR 10-2015-0031164 A | 23/03/2015 |
| | | US 2013-0089265 A1 | 11/04/2013 |
| | | US 2013-0108182 A1 | 02/05/2013 |
| | | US 2013-0129237 A1 | 23/05/2013 |
| | | US 2015-0010079 A1 | 08/01/2015 |

Form PCT/ISA/210 (patent family annex) (January 2015)

**INTERNATIONAL SEARCH REPORT**
Information on patent family members

International application No.

**PCT/KR2017/001523**

| Patent document cited in search report | Publication date | Patent family member | Publication date |
|---|---|---|---|
| | | US 2015-0010080 A1 | 08/01/2015 |
| | | US 2015-0010081 A1 | 08/01/2015 |
| | | US 2015-0010085 A1 | 08/01/2015 |
| | | US 2015-0010086 A1 | 08/01/2015 |
| | | US 2015-0010243 A1 | 08/01/2015 |
| | | US 2015-0010244 A1 | 08/01/2015 |
| | | US 2015-0016737 A1 | 15/01/2015 |
| | | US 2015-0016738 A1 | 15/01/2015 |
| | | US 2015-0016739 A1 | 15/01/2015 |
| | | US 2015-0016740 A1 | 15/01/2015 |
| | | US 2015-0016741 A1 | 15/01/2015 |
| | | US 2015-0208091 A1 | 23/07/2015 |
| | | US 2015-0256841 A1 | 10/09/2015 |
| | | US 2015-0264352 A1 | 17/09/2015 |
| | | US 2015-0281688 A1 | 01/10/2015 |
| | | US 8995778 B2 | 31/03/2015 |
| | | US 9036944 B2 | 19/05/2015 |
| | | US 9047667 B2 | 02/06/2015 |
| | | US 9053543 B2 | 09/06/2015 |
| | | US 9053544 B2 | 09/06/2015 |
| | | US 9058659 B2 | 16/06/2015 |
| | | US 9189869 B2 | 17/11/2015 |
| | | US 9202290 B2 | 01/12/2015 |
| | | US 9224214 B2 | 29/12/2015 |
| | | US 9224215 B2 | 29/12/2015 |
| | | WO 2011-068360 A2 | 09/06/2011 |
| | | WO 2011-068360 A3 | 15/09/2011 |
| | | WO 2011-155758 A2 | 15/12/2011 |
| | | WO 2011-155758 A3 | 19/04/2012 |
| | | WO 2012-002785 A2 | 05/01/2012 |
| | | WO 2012-002785 A3 | 12/04/2012 |
| KR 10-2014-0139459 A | 05/12/2014 | AU 2010-313997 A1 | 05/05/2011 |
| | | AU 2010-313997 B2 | 10/07/2014 |
| | | CA 2778534 A1 | 05/05/2011 |
| | | CA 2778534 C | 15/09/2015 |
| | | CA 2818572 A1 | 05/05/2011 |
| | | CA 2818572 C | 24/11/2015 |
| | | CA 2818587 A1 | 05/05/2011 |
| | | CA 2818587 C | 13/01/2015 |
| | | CA 2888395 A1 | 05/05/2011 |
| | | CA 2888395 C | 21/06/2016 |
| | | CA 2888396 A1 | 05/05/2011 |
| | | CA 2888396 C | 24/11/2015 |
| | | CN 102640492 A | 15/08/2012 |
| | | CN 102640492 B | 27/04/2016 |
| | | CN 103220521 A | 24/07/2013 |
| | | CN 103220521 B | 01/06/2016 |
| | | CN 103220526 A | 24/07/2013 |
| | | CN 103220526 B | 19/10/2016 |

Form PCT/ISA/210 (patent family annex) (January 2015)

## INTERNATIONAL SEARCH REPORT
Information on patent family members

International application No.

**PCT/KR2017/001523**

| Patent document cited in search report | Publication date | Patent family member | Publication date |
|---|---|---|---|
| | | CN 104581160 A | 29/04/2015 |
| | | CN 104581160 B | 01/06/2016 |
| | | CN 104581164 A | 29/04/2015 |
| | | CN 104581164 B | 01/06/2016 |
| | | CN 104602010 A | 06/05/2015 |
| | | CN 104796709 A | 22/07/2015 |
| | | CN 104796709 B | 19/10/2016 |
| | | CN 104796710 A | 22/07/2015 |
| | | EP 2471262 A2 | 04/07/2012 |
| | | EP 2629524 A1 | 21/08/2013 |
| | | EP 2629525 A1 | 21/08/2013 |
| | | EP 2739057 A1 | 04/06/2014 |
| | | EP 2741508 A1 | 11/06/2014 |
| | | EP 2741509 A1 | 11/06/2014 |
| | | EP 2755394 A1 | 16/07/2014 |
| | | EP 3059708 A1 | 24/08/2016 |
| | | JP 2013-214990 A | 17/10/2013 |
| | | JP 2013-214991 A | 17/10/2013 |
| | | JP 2013-509788 A | 14/03/2013 |
| | | JP 2015-111894 A | 18/06/2015 |
| | | JP 2015-111895 A | 18/06/2015 |
| | | JP 2015-144486 A | 06/08/2015 |
| | | KR 10-1434208 B1 | 27/08/2014 |
| | | KR 10-1452713 B1 | 21/10/2014 |
| | | KR 10-1452714 B1 | 22/10/2014 |
| | | KR 10-1545905 B1 | 20/08/2015 |
| | | KR 10-1608065 B1 | 31/03/2016 |
| | | US 2011-0103701 A1 | 05/05/2011 |
| | | US 2012-0114261 A1 | 10/05/2012 |
| | | US 2012-0243799 A1 | 27/09/2012 |
| | | US 2013-0083861 A1 | 04/04/2013 |
| | | US 2014-0064367 A1 | 06/03/2014 |
| | | US 2014-0064629 A1 | 06/03/2014 |
| | | US 2014-0072238 A1 | 13/03/2014 |
| | | US 2014-0294084 A1 | 02/10/2014 |
| | | US 8208742 B2 | 26/06/2012 |
| | | US 8320688 B2 | 27/11/2012 |
| | | US 8582901 B2 | 12/11/2013 |
| | | US 8837840 B2 | 16/09/2014 |
| | | US 8842922 B2 | 23/09/2014 |
| | | US 8842925 B2 | 23/09/2014 |
| | | US 8842926 B2 | 23/09/2014 |
| | | US 9264708 B2 | 16/02/2016 |
| | | WO 2011-053050 A2 | 05/05/2011 |
| | | WO 2011-053050 A3 | 09/09/2011 |
| JP 2015-027022 A | 05/02/2015 | NONE | |
| KR 10-2014-0077989 A | 24/06/2014 | CN 104247427 A | 24/12/2014 |
| | | EP 2777283 A1 | 17/09/2014 |

Form PCT/ISA/210 (patent family annex) (January 2015)

INTERNATIONAL SEARCH REPORT
Information on patent family members

International application No.

**PCT/KR2017/001523**

| Patent document cited in search report | Publication date | Patent family member | Publication date |
|---|---|---|---|
|  |  | JP 2015-502064 A | 19/01/2015 |
|  |  | WO 2013-068567 A1 | 16/05/2013 |
| US 2013-0315312 A1 | 28/11/2013 | CN 103222266 A | 24/07/2013 |
|  |  | JP 2016-034161 A | 10/03/2016 |
|  |  | WO 2013-076888 A1 | 30/05/2013 |

Form PCT/ISA/210 (patent family annex) (January 2015)